# EUROPEAN PATENT APPLICATION

(11) **EP 4 712 380 A1**
(43) Date of publication of application: **18.03.2026**
(21) Application number: 24818716.3
(22) Date of filing: 06.06.2024
(51) Int. Cl.: H04L 1/16

(54) **COMMUNICATION METHOD AND COMMUNICATION APPARATUS**

(30) Priority: 07.06.2023 CN 202310674041
(71) Applicant: Huawei Technologies Co., Ltd., Shenzhen, Guangdong 518129 (CN)
(72) Inventor: TIAN, Yang, Shenzhen, Guangdong 518129 (CN); CHEN, Jiaxuan, Shenzhen, Guangdong 518129 (CN); CHAI, Xiaomeng, Shenzhen, Guangdong 518129 (CN); SUN, Yan, Shenzhen, Guangdong 518129 (CN); LIANG, Jing, Shenzhen, Guangdong 518129 (CN); JIN, Huangping, Shenzhen, Guangdong 518129 (CN)
(74) Representative: MERH-IP Matias Erny Reichl Hoffmann Patentanwälte PartG mbB
(86) International application number: PCT/CN2024/097672
(87) International publication number: WO 2024/251184

(57) **Abstract**

Embodiments of this application provide a communication method and a communication apparatus. The method includes: A terminal device sends CSI feedback information to a network device, and the network device sends first indication information to the terminal device, to indicate the terminal device to re-report CSI feedback information. The solutions in embodiments of this application may be applied to a communication system with an AI/ML function, to help reduce adverse impact caused by a packet loss of CSI feedback information, and ensure CSI feedback performance.

## Description

This application claims priority to Chinese Patent Application No. 202310674041.8, filed with the China National Intellectual Property Administration on June 7, 2023 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

In a communication system, a network device needs to determine, based on downlink channel state information (channel state information, CSI), downlink channel-related configuration information such as a resource, a modulation and coding scheme (modulation and coding scheme, MCS), and precoding that are used to schedule a downlink data channel for a terminal device. The terminal device may calculate the downlink CSI by measuring a downlink reference signal, generate a CSI report, and feed back the CSI report to the network device.

After artificial intelligence (artificial intelligence, AI) is introduced into wireless communication, an AI-based CSI feedback mode emerges. An AI model has a stronger feature extraction capability, can compress channel information more effectively, reduce an information loss in a compression process, and ensure accuracy of recovered channel information.

Frequent packet losses of CSI feedback information severely affect feedback performance. Time-domain correlation-based CSI feedback is used as an example. An AI model on a terminal device side outputs CSI feedback information based on a current channel measurement result and state information; and an AI model on a network device side recovers channel information based on current CSI feedback information and state information. The state information on the terminal device side is determined based on a historical channel measurement result. The state information on the network device side is determined based on CSI feedback information received at a historical moment. To ensure feedback performance, the state information on the terminal device side and the state information on the network device side need to be updated synchronously. If feedback transmission fails, the state information on the network device side cannot be synchronously updated with the state information on the terminal device side, and a matching degree between the state information on the network device side and the state information on the terminal device side decreases as a quantity of packet loss times increases. This may cause a mismatch in a subsequent two-side processing process, resulting in a severe loss of feedback performance.

Therefore, how to ensure feedback performance in a case of the frequent packet losses of the CSI feedback information becomes an urgent problem to be resolved.

### SUMMARY

Embodiments of this application provide a communication method and a communication apparatus, to help reduce adverse impact caused by a packet loss of CSI feedback information, and ensure feedback performance.

According to a first aspect, a communication method is provided. The method may be performed by a terminal device, or may be performed by a chip or a circuit disposed in the terminal device. This is not limited in this application.

The method includes: sending first channel state information CSI feedback information to a network device; receiving first indication information from the network device; and sending one or more pieces of CSI feedback information to the network device based on the first indication information, where the one or more pieces of CSI feedback information include the first CSI feedback information.

In the solution in this embodiment of this application, a CSI feedback information resending mechanism is introduced. To be specific, the network device may indicate the terminal device to backhaul previously sent CSI feedback information. This helps avoid a problem that feedback performance deteriorates because CSI feedback information fails to be reported.

The first indication information indicates the terminal device to send the one or more pieces of CSI feedback information to the network device.

For example, the one or more pieces of CSI feedback information may be one or more pieces of CSI feedback information that fail to be reported. In this way, the terminal device may backhaul the CSI feedback information that fails to be reported.

With reference to the first aspect, in some implementations of the first aspect, before the sending the one or more pieces of CSI feedback information to the network device based on the first indication information, the method further includes: receiving second indication information from the network device, where the second indication information indicates to increase uplink transmit power.

In the solution in this embodiment of this application, the network device may indicate the terminal device to increase the uplink transmit power, to improve a channel transmission condition. This helps ensure successful transmission of the one or more pieces of CSI feedback information.

With reference to the first aspect, in some implementations of the first aspect, the sending first channel state information CSI feedback information to the network device includes: sending the first CSI feedback information to the network device on a first uplink resource indicated by first uplink resource configuration information; and the receiving the first indication information from the network device includes: receiving the first indication information and second uplink resource configuration information from the network device, where the second uplink resource configuration information indicates a second uplink resource used to transmit the one or more pieces of CSI feedback information, and a resource quantity for an uplink resource that is in the second uplink resource and that is used to transmit the first CSI feedback information is greater than a resource quantity for the first uplink resource.

In the solution in this embodiment of this application, the network device may adjust a configuration of a time-frequency domain resource to increase the uplink resource, to improve a channel transmission condition. This helps ensure successful transmission of the one or more pieces of CSI feedback information.

With reference to the first aspect, in some implementations of the first aspect, the first indication information may be used to determine the one or more pieces of CSI feedback information.

With reference to the first aspect, in some implementations of the first aspect, the first indication information indicates at least one of the following: an identifier of the one or more pieces of CSI feedback information, an identifier of a reference signal corresponding to the one or more pieces of CSI feedback information, a first time period, identifiers of K pieces of CSI feedback information including the one or more pieces of CSI feedback information, or identifiers of reference signals corresponding to the K pieces of CSI feedback information, where K is a positive integer, the first time period is before a sending moment of the first indication information, and a sending moment of the one or more pieces of CSI feedback information is within the first time period, or a sending moment of the K pieces of CSI feedback information is within the first time period.

For example, the one or more pieces of CSI feedback information may be one or more pieces of CSI feedback information that are in the K pieces of CSI feedback information and that are nearest from the current moment. Alternatively, the one or more pieces of CSI feedback information may be one or more pieces of CSI feedback information randomly selected from the K pieces of CSI feedback information.

With reference to the first aspect, in some implementations of the first aspect, the first CSI feedback information is an output of a second AI model or is based on the output of the second AI model, an input of the second AI model includes a channel measurement result of a first reference signal, the output of the second AI model is related to the channel measurement result of the first reference signal and a first historical input of the second AI model, the first historical input of the second AI model includes a channel measurement result of a first historical reference signal, and a sending moment of the first historical reference signal is earlier than a sending moment of the first reference signal; and when the first CSI feedback information is successfully reported, channel information corresponding to the first reference signal is an output of the first AI model, and an input of the first AI model includes the first CSI feedback information or is based on the first CSI feedback information, where the output of the first AI model is related to the first CSI feedback information and a first historical input of the first AI model, the first historical input of the first AI model includes first historical CSI feedback information or is based on the first historical CSI feedback information, and a receiving moment of the first historical CSI feedback information is earlier than a receiving moment of the first CSI feedback information.

For example, the first CSI feedback information may be obtained by processing the output of the second AI model. For example, the first CSI feedback information may be obtained by quantizing the output of the second AI model.

For example, the input of the first AI model may be obtained by processing the first CSI feedback information. For example, the first CSI feedback information is dequantized and then input to the first AI model.

In the solution in this embodiment of this application, a CSI feedback information resending mechanism is introduced. To be specific, the network device may indicate the terminal device to backhaul previously sent CSI feedback information. In a time-domain correlation-based CSI feedback scenario, this helps avoid a problem that feedback performance continuously deteriorates because CSI feedback information fails to be reported.

With reference to the first aspect, in some implementations of the first aspect, a quantity of reporting failure times of CSI feedback information reaches a first threshold.

With reference to the first aspect, in some implementations of the first aspect, the first threshold is predefined or preconfigured, or the first threshold is a ratio of a tolerance interval of a first AI model to a sending periodicity of a reference signal, and the tolerance interval is predefined or preconfigured.

When CSI feedback information #2 corresponding to a reference signal #2 is successfully reported, an input of the first AI model includes the CSI feedback information #2, and an output of the first AI model includes channel information corresponding to the reference signal #2. When CSI feedback information #3 corresponding to a reference signal #3 fails to be reported, an input of the first AI model includes the CSI feedback information #2, and an output of the first AI model includes channel information corresponding to the reference signal #3. A sending moment of the reference signal #2 is earlier than a sending moment of the reference signal #3. A tolerance interval of the first AI model is a maximum value of a difference between a moment at which the first AI model generates the channel information corresponding to the reference signal #3 and a receiving moment of the CSI feedback information #2. In a case in which the input includes the CSI feedback information #2 when the first AI model generates reference signal #3, a performance deterioration degree is less than or equal to the threshold #3. The maximum value of the difference corresponds to the threshold #3.

In the solution in this embodiment of this application, the first threshold may be determined based on the ratio of the tolerance interval of the first AI model to the sending periodicity of the reference signal. This helps avoid severe performance deterioration caused when the network device recovers channel information by using historical CSI feedback information that exceeds the tolerance interval.

According to a second aspect, a communication method is provided. The method may be performed by a terminal device, or may be performed by a chip or a circuit disposed in the terminal device. This is not limited in this application.

The method includes: receiving third indication information from a network device, where the third indication information indicates to switch from a first CSI feedback mode to a second CSI feedback mode, and a quantity of reporting failure times of CSI feedback information reaches a first threshold; and performing CSI feedback with the network device in the second CSI feedback mode.

According to the solution in this embodiment of this application, the terminal device and the network device perform CSI feedback in the first CSI feedback mode. After a quantity of pieces of CSI feedback information that fails to be reported reaches a specific threshold (namely, the first threshold), the network device may indicate the terminal device to switch to the second CSI feedback mode. In this way, the network device and the terminal device may perform CSI feedback in the second CSI feedback mode, to avoid performance deterioration caused by a packet loss of the CSI feedback information in the first CSI feedback mode, and help the network device obtain accurate channel information, thereby ensuring feedback performance to ensure user experience.

With reference to the second aspect, in some implementations of the second aspect, the first threshold is predefined or preconfigured, or the first threshold is a ratio of a tolerance interval of a first AI model to a sending periodicity of a reference signal, and the tolerance interval is predefined or preconfigured.

With reference to the second aspect, in some implementations of the second aspect, in the first CSI feedback mode, second CSI feedback information is an output of a second AI model or is based on the output of the second AI model, an input of the second AI model includes a channel measurement result of a second reference signal, the output of the second AI model is related to the channel measurement result of the second reference signal and a second historical input of the second AI model, the second historical input of the second AI model includes a channel measurement result of a second historical reference signal, and a sending moment of the second historical reference signal is earlier than a sending moment of the second reference signal; and in the second CSI feedback mode, third CSI feedback information is an output of a third AI model or is based on the output of the third AI model, an input of the third AI model includes a channel measurement result of a third reference signal, the output of the third AI model is related to the channel measurement result of the third reference signal and a third historical input of the third AI model, the third historical input of the third AI model includes a channel measurement result of a third historical reference signal, and a sending moment of the third historical reference signal is earlier than a sending moment of the third reference signal, where a quantity of bits of the third CSI feedback information is less than a quantity of bits of the second CSI feedback information.

In other words, both the second AI model and the third AI model are time-domain correlation-based AI models, and a quantity of bits of the CSI feedback information generated based on the second AI model is greater than a quantity of bits of the CSI feedback information generated based on the third AI model.

In the first CSI feedback mode, recovery of channel information at the current moment is related to recovery of historical channel information, and accuracy of the channel recovery at the current moment continuously decreases as a quantity of packet loss times of historical feedback information increases, that is, performance continuously deteriorates. In the solution in this embodiment of this application, the second CSI feedback mode still uses a time-domain correlation-based feedback mode. In this way, a time-domain correlation can still be used to improve accuracy of recovering the channel information, to improve feedback performance. In addition, the feedback mode is switched to the model using a smaller quantity of feedback bits, that is, a quantity of bits of CSI feedback information is reduced, thereby reducing a requirement on a channel transmission condition for sending uplink feedback information, that is, helping a time-domain correlation-based CSI feedback process adapt to the current channel transmission condition. This helps reduce a packet loss of the uplink feedback information, to help ensure user experience.

With reference to the second aspect, in some implementations of the second aspect, in the first CSI feedback mode, second CSI feedback information is an output of a second AI model or is based on the output of the second AI model, an input of the second AI model includes a channel measurement result of a second reference signal, the output of the second AI model is related to the channel measurement result of the second reference signal and a second historical input of the second AI model, the second historical input of the second AI model includes a channel measurement result of a second historical reference signal, and a sending moment of the second historical reference signal is earlier than a sending moment of the second reference signal; and in the second CSI feedback mode, fourth CSI feedback information is an output of a fourth AI model or is based on the output of the fourth AI model, an input of the fourth AI model includes a channel measurement result of a fourth reference signal, and the output of the fourth AI model is related to the channel measurement result of the fourth reference signal.

In other words, the output of the fourth AI model is unrelated to a historical input of the fourth AI model. The fourth AI model is a non-time-domain correlation-based AI model.

In the solution in this embodiment of this application, in the second CSI feedback mode, the CSI feedback information is generated and the channel information is recovered by using the non-time-domain correlation-based model, and determining of the channel information is unrelated to the historical data, to avoid a problem that feedback performance continuously deteriorates because the CSI feedback information fails to be reported in the first CSI feedback mode. This helps ensure feedback performance to ensure user experience.

With reference to the second aspect, in some implementations of the second aspect, in the first CSI feedback mode, second CSI feedback information is an output of a second AI model or is based on the output of the second AI model, an input of the second AI model includes a channel measurement result of a second reference signal, the output of the second AI model is related to the channel measurement result of the second reference signal and a second historical input of the second AI model, the second historical input of the second AI model includes a channel measurement result of a second historical reference signal, and a sending moment of the second historical reference signal is earlier than a sending moment of the second reference signal; and in the second CSI feedback mode, fifth CSI feedback information is based on a predefined codebook and a channel measurement result of a fifth reference signal.

The predefined codebook may be understood as a non-AI model. That is, the fifth CSI feedback information is generated by using the non-AI model.

In the solution in this embodiment of this application, in the second CSI feedback mode, CSI feedback is performed in a manner fed back based on the predefined codebook, and determining of the channel information is unrelated to historical data, to avoid a problem that feedback performance continuously deteriorates because the CSI feedback information fails to be reported in the first CSI feedback mode. This helps ensure feedback performance to ensure user experience.

According to a third aspect, a communication method is provided. The method may be performed by a terminal device, or may be performed by a chip or a circuit disposed in the terminal device. This is not limited in this application.

The method includes: receiving fourth indication information from a network device, where a quantity of reporting failure times of CSI feedback information reaches a threshold #1, the fourth indication information indicates to reset first state information of a second AI model to second state information, the second state information occurs before the CSI feedback information fails to be reported, the first state information is based on a fourth historical input of the second AI model, the fourth historical input of the second AI model includes a channel measurement result of a fourth historical reference signal, the second state information is initial state information of the second AI model or is based on a fifth historical input based on the second AI model, the fifth historical input of the second AI model includes a channel measurement result of a fifth historical reference signal, and a sending moment of the fourth historical reference signal is later than a sending moment of the fifth historical reference signal; and sending sixth CSI feedback information to the network device, where the sixth CSI feedback information is an output of the second AI model or is based on the output of the second AI model, an input of the second AI model includes a channel measurement result of a sixth reference signal, and the output of the second AI model is related to the channel measurement result of the sixth reference signal and the second state information.

In the solution in this embodiment of this application, after the quantity of pieces of CSI feedback information that fails to be reported reaches a specific threshold, the network device may indicate to reset the state information of the model used to generate the CSI feedback information, and to reset the state information of the model before a packet loss of the CSI feedback information occurs, to recover consistency between the state information of the model on the network device and the state information of the model on the terminal device. This helps improve accuracy of channel information recovered by the network device, to improve feedback performance, and help ensure user experience.

With reference to the third aspect, in some implementations of the third aspect, the first threshold is predefined or preconfigured, or the first threshold is a ratio of a tolerance interval of a first AI model to a sending periodicity of a reference signal, and the tolerance interval is predefined or preconfigured.

According to a fourth aspect, a communication method is provided. The method may be performed by a network device, or may be performed by a chip or a circuit disposed in the network device. This is not limited in this application.

The method includes: sending first uplink resource configuration information to a terminal device, where the first uplink resource configuration information indicates a first uplink resource used to transmit first channel state information CSI feedback information; sending first indication information and second uplink resource configuration information to the terminal device, where the first indication information indicates the terminal device to send one or more pieces of CSI feedback information, the second uplink resource configuration information indicates a second uplink resource used to transmit the one or more pieces of CSI feedback information, and the one or more pieces of CSI feedback information include the first CSI feedback information; and receiving the one or more pieces of CSI feedback information from the terminal device.

With reference to the fourth aspect, in some implementations of the fourth aspect, before the receiving the one or more pieces of CSI feedback information from the terminal device, the method further includes: sending second indication information to the terminal device, where the second indication information indicates to increase uplink transmit power.

With reference to the fourth aspect, in some implementations of the fourth aspect, a resource quantity for an uplink resource that is in the second uplink resource and that is used to transmit the first CSI feedback information is greater than a resource quantity for the first uplink resource.

With reference to the fourth aspect, in some implementations of the fourth aspect, the first indication information may be used to determine the one or more pieces of CSI feedback information.

With reference to the fourth aspect, in some implementations of the fourth aspect, the first indication information indicates at least one of the following: an identifier of the one or more pieces of CSI feedback information, an identifier of a reference signal corresponding to the one or more pieces of CSI feedback information, a first time period, identifiers of K pieces of CSI feedback information including the one or more pieces of CSI feedback information, or identifiers of reference signals corresponding to the K pieces of CSI feedback information, where K is a positive integer, the first time period is before a sending moment of the first indication information, and a sending moment of the one or more pieces of CSI feedback information is within the first time period, or a sending moment of the K pieces of CSI feedback information is within the first time period.

With reference to the fourth aspect, in some implementations of the fourth aspect, a quantity of reporting failure times of CSI feedback information reaches a first threshold.

With reference to the fourth aspect, in some implementations of the fourth aspect, the first threshold is predefined or preconfigured, or the first threshold is a ratio of a tolerance interval of a first AI model to a sending periodicity of a reference signal, and the tolerance interval is predefined or preconfigured.

With reference to the fourth aspect, in some implementations of the fourth aspect, the first CSI feedback information is an output of a second AI model or is based on the output of the second AI model, an input of the second AI model includes a channel measurement result of a first reference signal, the output of the second AI model is related to the channel measurement result of the first reference signal and a first historical input of the second AI model, the first historical input of the second AI model includes a channel measurement result of a first historical reference signal, and a sending moment of the first historical reference signal is earlier than a sending moment of the first reference signal; and when the first CSI feedback information is successfully reported, channel information corresponding to the first reference signal is an output of the first AI model, and an input of the first AI model includes the first CSI feedback information or is based on the first CSI feedback information, where the output of the first AI model is related to the first CSI feedback information and a first historical input of the first AI model, the first historical input of the first AI model includes first historical CSI feedback information or is based on the first historical CSI feedback information, and a receiving moment of the first historical CSI feedback information is earlier than a receiving moment of the first CSI feedback information.

According to a fifth aspect, a communication method is provided. The method may be performed by a network device, or may be performed by a chip or a circuit disposed in the network device. This is not limited in this application.

The method includes: sending third indication information to a terminal device, where a quantity of reporting failure times of CSI feedback information reaches a first threshold, and the third indication information indicates to switch from a first CSI feedback mode to a second CSI feedback mode; and performing CSI feedback with the terminal device in the second CSI feedback mode.

With reference to the fifth aspect, in some implementations of the fifth aspect, the first threshold is predefined or preconfigured, or the first threshold is a ratio of a tolerance interval of a first AI model to a sending periodicity of a reference signal, and the tolerance interval is predefined or preconfigured.

With reference to the fifth aspect, in some implementations of the fifth aspect, in the first CSI feedback mode, second CSI feedback information is an output of a second AI model or is based on the output of the second AI model, an input of the second AI model includes a channel measurement result of a second reference signal, the output of the second AI model is related to the channel measurement result of the second reference signal and a second historical input of the second AI model, the second historical input of the second AI model includes a channel measurement result of a second historical reference signal, and a sending moment of the second historical reference signal is earlier than a sending moment of the second reference signal; and in the second CSI feedback mode, third CSI feedback information is an output of a third AI model or is based on the output of the third AI model, an input of the third AI model includes a channel measurement result of a third reference signal, the output of the third AI model is related to the channel measurement result of the third reference signal and a third historical input of the third AI model, the third historical input of the third AI model includes a channel measurement result of a third historical reference signal, and a sending moment of the third historical reference signal is earlier than a sending moment of the third reference signal, where a quantity of bits of the third CSI feedback information is less than a quantity of bits of the second CSI feedback information.

With reference to the fifth aspect, in some implementations of the fifth aspect, in the first CSI feedback mode, second CSI feedback information is an output of a second AI model or is based on the output of the second AI model, an input of the second AI model includes a channel measurement result of a second reference signal, the output of the second AI model is related to the channel measurement result of the second reference signal and a second historical input of the second AI model, the second historical input of the second AI model includes a channel measurement result of a second historical reference signal, and a sending moment of the second historical reference signal is earlier than a sending moment of the second reference signal; and in the second CSI feedback mode, fourth CSI feedback information is an output of a fourth AI model or is based on the output of the fourth AI model, an input of the fourth AI model includes a channel measurement result of a fourth reference signal, and the output of the fourth AI model is related to the channel measurement result of the fourth reference signal.

With reference to the fifth aspect, in some implementations of the fifth aspect, in the first CSI feedback mode, second CSI feedback information is an output of a second AI model or is based on the output of the second AI model, an input of the second AI model includes a channel measurement result of a second reference signal, the output of the second AI model is related to the channel measurement result of the second reference signal and a second historical input of the second AI model, the second historical input of the second AI model includes a channel measurement result of a second historical reference signal, and a sending moment of the second historical reference signal is earlier than a sending moment of the second reference signal; and in the second CSI feedback mode, fifth CSI feedback information is based on a predefined codebook and a channel measurement result of a fifth reference signal.

According to a sixth aspect, a communication method is provided. The method may be performed by a network device, or may be performed by a chip or a circuit disposed in the network device. This is not limited in this application.

The method includes: sending fourth indication information to a terminal device, where a quantity of reporting failure times of CSI feedback information reaches a first threshold, the fourth indication information indicates to reset first state information of a second AI model to second state information, the second state information occurs before the CSI feedback information fails to be reported, the first state information is based on a fourth historical input of the second AI model, the fourth historical input of the second AI model includes a channel measurement result of a fourth historical reference signal, the second state information is initial state information of the second AI model or is based on a fifth historical input based on the second AI model, the fifth historical input of the second AI model includes a channel measurement result of a fifth historical reference signal, and a sending moment of the fourth historical reference signal is later than a sending moment of the fifth historical reference signal; and receiving sixth CSI feedback information from the terminal device, where the sixth CSI feedback information is an output of the second AI model or is based on the output of the second AI model, an input of the second AI model includes a channel measurement result of a sixth reference signal, and the output of the second AI model is related to the channel measurement result of the sixth reference signal and the second state information.

With reference to the sixth aspect, in some implementations of the sixth aspect, the first threshold is predefined or preconfigured, or the first threshold is a ratio of a tolerance interval of a first AI model to a sending periodicity of a reference signal, and the tolerance interval is predefined or preconfigured.

According to a seventh aspect, a communication apparatus is provided. The communication apparatus may be a terminal device, may be an apparatus, a module, a circuit, a chip, or the like disposed in the terminal device, or may be an apparatus that can be used in cooperation with the terminal device. In a design, the communication apparatus may include modules that perform and that one-to-one correspond to the methods/operations/steps/actions described in any one of the first aspect to the third aspect. The module may be implemented by using a hardware circuit, software, or a combination of the hardware circuit and the software. In a design, the communication apparatus may include a processing module and a communication module.

The sending module is configured to perform a sending action in the method described in any one of the first aspect to the third aspect, the processing module is configured to perform a processing action in the method described in any one of the first aspect to the third aspect, and the receiving module is configured to perform a receiving action in the method described in any one of the first aspect to the third aspect.

According to an eighth aspect, a communication apparatus is provided. The communication apparatus may be a network device, may be an apparatus, a module, a circuit, a chip, or the like disposed in the network device, or may be an apparatus that can be used in cooperation with the network device. In a design, the communication apparatus may include modules that perform and that one-to-one correspond to the methods/operations/steps/actions described in any one of the fourth aspect to the sixth aspect. The module may be implemented by using a hardware circuit, software, or a combination of the hardware circuit and the software. In a design, the communication apparatus may include a processing module and a communication module.

The receiving module is configured to perform a receiving action in the method described in any one of the fourth aspect to the sixth aspect, the processing module is configured to perform a processing action in the method described in any one of the fourth aspect to the sixth aspect, and the sending module is configured to perform a sending action in the method described in any one of the fourth aspect to the sixth aspect.

According to a ninth aspect, a communication apparatus is provided, including a processor and a storage medium. The storage medium stores instructions, and when the instructions are run by the processor, the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, the method according to any one of the fourth aspect or the possible implementations of the fourth aspect is implemented, the method according to any one of the fifth aspect or the possible implementations of the fifth aspect is implemented, or the method according to any one of the sixth aspect or the possible implementations of the sixth aspect is implemented.

According to a tenth aspect, a communication apparatus is provided, including a processor. The processor is configured to process data and/or information, so that the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, the method according to any one of the fourth aspect or the possible implementations of the fourth aspect is implemented, the method according to any one of the fifth aspect or the possible implementations of the fifth aspect is implemented, or the method according to any one of the sixth aspect or the possible implementations of the sixth aspect is implemented.

Optionally, the communication apparatus may further include a communication interface. The communication interface is configured to: receive data and/or information, and transmit the received data and/or information to the processor. Optionally, the communication interface is further configured to output data and/or information processed by the processor.

According to an eleventh aspect, a chip is provided, including a processor. The processor is configured to run a program or instructions, so that the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, the method according to any one of the fourth aspect or the possible implementations of the fourth aspect is implemented, the method according to any one of the fifth aspect or the possible implementations of the fifth aspect is implemented, or the method according to any one of the sixth aspect or the possible implementations of the sixth aspect is implemented.

Optionally, the chip may further include a memory, and the memory is configured to store a program or instructions. Optionally, the chip may further include a transceiver.

According to a twelfth aspect, a computer-readable storage medium is provided. The computer-readable storage medium includes instructions. When the instructions are run by a processor, the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, the method according to any one of the fourth aspect or the possible implementations of the fourth aspect is implemented, the method according to any one of the fifth aspect or the possible implementations of the fifth aspect is implemented, or the method according to any one of the sixth aspect or the possible implementations of the sixth aspect is implemented.

According to a thirteenth aspect, a computer program product is provided. The computer program product includes computer program code or instructions. When the computer program code or the instructions are run, the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, the method according to any one of the fourth aspect or the possible implementations of the fourth aspect is implemented, the method according to any one of the fifth aspect or the possible implementations of the fifth aspect is implemented, or the method according to any one of the sixth aspect or the possible implementations of the sixth aspect is implemented.

According to a fourteenth aspect, a communication system is provided. The communication system includes one or a combination of the following apparatuses: the communication that performs any one of the first aspect or the possible implementations of the first aspect, the communication apparatus that performs any one of the second aspect or the possible implementations of the second aspect, the communication apparatus that performs any one of the third aspect or the possible implementations of the third aspect, the communication apparatus that performs any one of the fourth aspect or the possible implementations of the fourth aspect, the communication apparatus that performs any one of the fifth aspect or the possible implementations of the fifth aspect, or the communication apparatus that performs any one of the sixth aspect or the possible implementations of the sixth aspect.

### BRIEF DESCRIPTION OF DRAWINGS

FIG. 1 is a diagram of a communication system to which an embodiment of this application is applicable;
FIG. 2 is a diagram of another communication system to which an embodiment of this application is applicable;
FIG. 3 is a block diagram of an auto-encoder;
FIG. 4 is a diagram of an AI application framework;
FIG. 5 is a diagram of a time-domain correlation-based CSI feedback procedure;
FIG. 6 is a diagram of another time-domain correlation-based CSI feedback procedure;
FIG. 7 is a schematic flowchart of a communication method according to an embodiment of this application;
FIG. 8 is a diagram of an uplink resource according to an embodiment of this application;
FIG. 9 is a diagram of performance in different cases;
FIG. 10 is a schematic flowchart of another communication method according to an embodiment of this application;
FIG. 11 is a schematic flowchart of still another communication method according to an embodiment of this application;
FIG. 12 is a diagram of a time-domain correlation-based CSI feedback procedure according to an embodiment of this application;
FIG. 13 is a schematic flowchart of still another communication method according to an embodiment of this application;
FIG. 14 is a schematic flowchart of still another communication method according to an embodiment of this application;
FIG. 15 is a schematic flowchart of still another communication method according to an embodiment of this application;
FIG. 16 is a schematic flowchart of still another communication method according to an embodiment of this application;
FIG. 17 is a schematic flowchart of still another communication method according to an embodiment of this application;
FIG. 18 is a schematic flowchart of still another communication method according to an embodiment of this application;
FIG. 19 is a block diagram of a communication apparatus according to an embodiment of this application; and
FIG. 20 is a block diagram of another communication apparatus according to an embodiment of this application.

### DESCRIPTION OF EMBODIMENTS

The following describes technical solutions of this application with reference to the accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system like a 6th generation (6th generation, 6G) mobile communication system, or a system integrating a plurality of systems. The technical solutions provided in this application may be further applied to device-to-device (device-to-device, D2D) communication, vehicle-to-everything (vehicle-to-everything, V2X) communication, and machine-to-machine (machine-to-machine, M2M) communication, a machine type communication (machine type communication, MTC), an internet of things (internet of things, IoT) communication system, or another communication system.

A network element in the communication system may send a signal to another network element or receive a signal from another network element. The signal may include information, signaling, data, or the like. The network element may alternatively be replaced with an entity, a network entity, a device, a communication device, a communication module, a node, a communication node, or the like. In this disclosure, the network element is used as an example for description. For example, the communication system may include at least one terminal device and at least one network device. The network device may send a downlink signal to the terminal device, and/or the terminal device may send an uplink signal to the network device. It may be understood that in this disclosure, the terminal device may be replaced with a first network element, the network device may be replaced with a second network element, and the terminal device and the network device perform the corresponding communication methods in this disclosure.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data, for example, a handheld device with a wireless connection function or a vehicle-mounted device. Currently, some terminals may be, for example, a mobile phone (mobile phone), a tablet computer, a laptop computer, a palmtop, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a wearable device, a terminal device in a 5G network, or a terminal device in a further evolved public land mobile network (public land mobile network, PLMN). This is not limited in embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or some of functions without depending on smartphones, for example, smart watches or smart glasses, and include devices that dedicated to only one type of application function and need to collaboratively work with other devices such as smartphones, for example, various smart bands or smart jewelry for monitoring physical signs.

In embodiments of this application, an apparatus configured to implement a function of the terminal device may be the terminal device, or may be an apparatus that can support the terminal device in implementing the function, for example, a chip system. The apparatus may be mounted in the terminal device or used in cooperation with the terminal device. In embodiments of this application, the chip system may include a chip, or may include a chip and another discrete device. In embodiments of this application, an example in which the apparatus configured to implement the function of the terminal device is the terminal device is merely used for description, and constitutes no limitation on the solutions in embodiments of this application.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover any of the following names in a broad sense, or may be replaced with the following names, for example, a NodeB (NodeB), an evolved NodeB (evolved NodeB, eNB), a next-generation NodeB (next-generation NodeB, gNB), a relay station, an access point, a transmission reception point (transmission reception point, TRP), a transmitting point (transmitting point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, and a device that bears a base station function in D2D, V2X, and M2M communication, a network side device in a 6G network, a device that bears a base station function in a future communication system, or the like. The base station may support networks using a same access technology or different access technologies. Optionally, the RAN node may be a server, a wearable device, a vehicle, a vehicle-mounted device, or the like. For example, an access network device in a V2X technology may be a road side unit (road side unit, RSU). A specific technology and a specific device form used by the network device are not limited in embodiments of this application.

The base station may be fixed or mobile. For example, a helicopter or an uncrewed aerial vehicle may be configured as a mobile base station, and one or more cells may move based on a location of the mobile base station. In another examples, a helicopter or an uncrewed aerial vehicle may be configured as a device for communicating with another base station.

In some deployments, the network device mentioned in embodiments of this application may be a device including a CU, a DU, or a CU and a DU, or a device including a CU control plane (central unit-control plane (central unit-control plane, CU-CP)) node, a CU user plane (central unit-user plane (central unit-user plane, CU-UP)) node, and a DU node. For example, the network device may include a gNB-CU-CP, a gNB-CU-UP, and a gNB-DU.

In some deployments, a plurality of RAN nodes cooperate to assist the terminal in implementing radio access, and different RAN nodes separately implement some functions of the base station. For example, the RAN node may be a CU, a DU, a CU-CP, a CU-UP, or an RU. The CU and the DU may be disposed separately, or may be included in a same network element, for example, a BBU. The RU may be included in a radio frequency device or a radio frequency unit, for example, included in an RRU, an AAU, or an RRH.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of the software module and the hardware module.

In embodiments of this application, an apparatus configured to implement a function of the network device may be the network device; or may be an apparatus that can support the network device in implementing the function, for example, a chip system, a hardware circuit, a software module, or a combination of the hardware circuit and the software module. The apparatus may be mounted in the network device or used in cooperation with the network device. In embodiments of this application, an example in which the apparatus configured to implement the function of the network device is the network device is merely used for description, and constitutes no limitation on the solutions in embodiments of this application.

The network device and/or the terminal device may be deployed on land, including an indoor or outdoor device, a handheld device, or a vehicle-mounted device; may be deployed on a water surface; or may be deployed on an airplane, a balloon, or a satellite in the air. A scenario in which the network device and the terminal device are located is not limited in embodiments of this application. In addition, the terminal device and the network device may be hardware devices; may be software functions running on dedicated hardware, or software functions running on general-purpose hardware, for example, virtualization functions instantiated on a platform (for example, a cloud platform); or may be entities including a dedicated or general-purpose hardware device and a software function. Specific forms of the terminal device and the network device are not limited in this application.

In a wireless communication network, for example, in a mobile communication network, services supported by the network are increasingly diversified, and therefore requirements that need to be satisfied are increasingly diversified. For example, the network needs to be capable of supporting an ultra-high rate, an ultra-low latency, and/or massive connections. This feature makes network planning, network configuration, and/or resource scheduling increasingly complex. In addition, because a network function is increasingly powerful, for example, supporting an increasingly high spectrum and supporting new technologies such as a high-order multiple-input multiple-output (multiple-input multiple-output, MIMO) technology, beamforming, and/or beam management, network energy saving becomes a hot research topic. These new requirements, scenarios, and features cause unprecedented challenges to network planning, operation and maintenance, and efficient operation. To meet this challenge, an artificial intelligence technology may be introduced into the wireless communication network, to implement network intelligence.

To support the AI technology in a wireless network, an AI node may be further introduced into the network.

Optionally, the AI node may be deployed at one or more of the following locations in the communication system: an access network device, a terminal device, a core network device, or the like. Alternatively, the AI node may be independently deployed, for example, deployed at a location other than any one of the foregoing devices, for example, a host or a cloud server in an over the top (over the top, OTT) system. The AI node may communicate with other devices in the communication system. The other devices may be, for example, one or more of the following: a network device, a terminal device, a network element in a core network, or the like.

It may be understood that a quantity of AI nodes is not limited in this application. For example, when there are a plurality of AI nodes, the plurality of AI nodes may be obtained through division based on functions. For example, different AI nodes are responsible for different functions.

It may be further understood that the AI nodes may be independent devices, may be integrated into a same device to implement different functions, may be network elements in a hardware device, may be software functions running on dedicated hardware, or may be virtualized functions instantiated on a platform (for example, a cloud platform). Specific forms of the AI node are not limited in this application.

The AI node may be an AI network element or an AI module. The AI node is configured to implement a corresponding AI function. AI modules deployed in different network elements may be the same or different. An AI model of the AI node is configured based on different parameters, and the AI node can implement different functions. The AI model of the AI node may be configured based on one or more of the following parameters: a structure parameter (for example, at least one of the following: a quantity of layers of a neural network, a width of a neural network, a connection relationship between layers, a weight of a neuron, an activation function of a neuron, or a bias in an activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI node may have one or more models. Learning processes, training processes, or inference processes of different models may be deployed on different nodes or devices, or may be deployed on a same node or device.

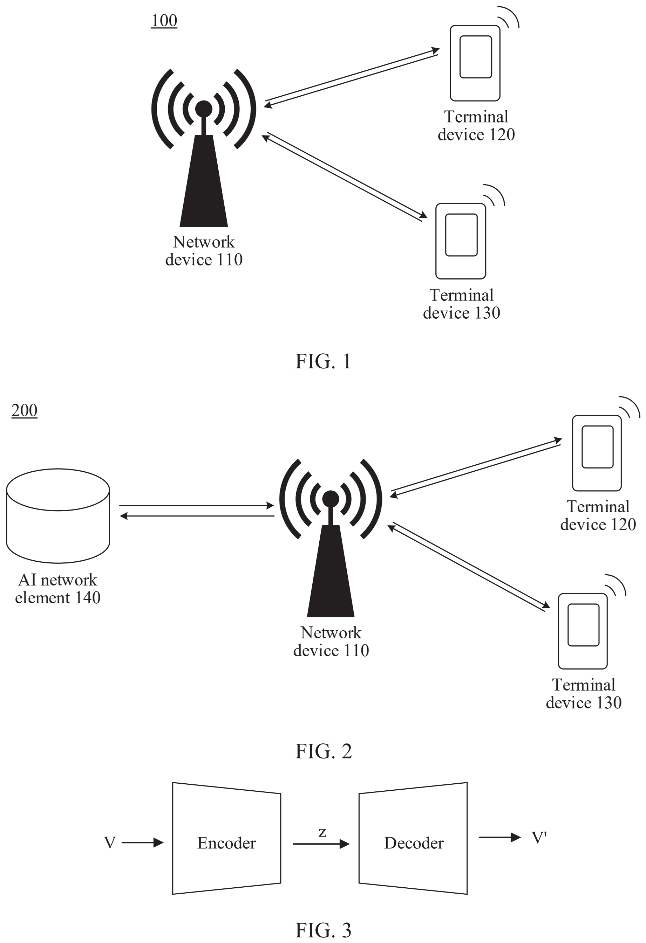

FIG. 1 is a diagram of a communication system to which a communication method according to an embodiment of this application is applicable. As shown in FIG. 1, the communication system 100 may include at least one network device, for example, a network device 110 shown in FIG. 1; and the communication system 100 may further include at least one terminal device, for example, a terminal device 120 and a terminal device 130 shown in FIG. 1. The network device 110 and the terminal devices (for example, the terminal device 120 and the terminal device 130) may communicate with each other over a radio link. Communication devices, for example, the network device 110 and the terminal device 120, in the communication system, may communicate with each other by using a multi-antenna technology.

FIG. 2 is a diagram of another communication system to which a communication method according to an embodiment of this application is applicable. Compared with the communication system 100 shown in FIG. 1, the communication system 200 shown in FIG. 2 further includes an AI network element 140. The AI network element 140 is configured to: perform an AI-related operation, for example, construct a training dataset or train an AI model.

In a possible implementation, the network device 110 may send, to the AI network element 140, data related to training of an AI model, and the AI network element 140 constructs a training dataset and trains the AI model. For example, the data related to the training of the AI model may include data reported by the terminal device. The AI network element 140 may send, to the network device 110, a result of an operation related to the AI model, and forward the result to the terminal device via the network device 110. For example, the result of the operation related to the AI model may include at least one of the following: a trained AI model, an evaluation result or a test result for the model, and the like. For example, a part of the trained AI model may be deployed on the network device 110, and the other part is deployed on the terminal device. Alternatively, the trained AI model may be deployed on the network device 110. Alternatively, the trained AI model may be deployed on the terminal device.

It should be understood that FIG. 2 is described only by using an example in which the AI network element 140 is directly connected to the network device 110. In another scenario, the AI network element 140 may alternatively be connected to the terminal device. Alternatively, the AI network element 140 may be connected to both the network device 110 and the terminal device. Alternatively, the AI network element 140 may be connected to the network device 110 via a third-party network element. A connection relationship between the AI network element and another network element is not limited in embodiments of this application.

The AI network element 140 may alternatively be disposed in a network device and/or a terminal device as a module, for example, disposed in the network device 110 or the terminal device shown in FIG. 1. One or more AI modules may be deployed on the network device 110. One or more AI modules may be deployed on the terminal device.

It should be noted that FIG. 1 and FIG. 2 are merely simplified diagrams of examples for ease of understanding. For example, the communication system may further include another device, for example, may further include a wireless relay device and/or a wireless backhaul device, which is/are not shown in FIG. 1 and FIG. 2. During actual application, the communication system may include a plurality of network devices, or may include a plurality of terminal devices. Quantities of network devices and terminal devices included in the communication system are not limited in embodiments of this application.

For ease of understanding the solutions in embodiments of this application, the following describes terms that may be used in embodiments of this application.

### (1) AI model:

The AI model is an algorithm or a computer program that can implement an AI function. The AI model represents a mapping relationship between an input and an output of the model. A type of the AI model may be a neural network, a linear regression model, a decision tree model, a support vector machine (support vector machine, SVM), a Bayesian network, a Q-learning model, or another machine learning (machine learning, ML) model.

### (2) Two-side model:

The two-side model may also be referred to as a bilateral model, a cooperative model, a dual model, a two-side (two-side) model, or the like. The two-side model is a model including a plurality of submodels. The plurality of submodels included in the model need to match each other. The plurality of submodels may be deployed on different nodes.

Embodiments of this application relate to an encoder for compressing CSI and a decoder for recovering compressed CSI. The encoder and the decoder are used in cooperation. It may be understood that the encoder and the decoder are AI models that match each other. One encoder may include one or more AI models, and a decoder matching the encoder also includes one or more AI models. An encoder and a decoder that are used in cooperation include a same quantity of AI models, and AI models included in the encoder are in one-to-one correspondence with AI models included in the decoder.

In a possible design, a set of encoder (encoder) and decoder (decoder) that are used in cooperation may be two parts of a same auto-encoder (auto-encoder, AE). An AE model in which an encoder and a decoder are separately deployed on different nodes is a typical bilateral model. The encoder and the decoder of the AE model are usually an encoder and a decoder that are jointly trained and that are used in cooperation. The auto-encoder is an unsupervised learning neural network, and is characterized by using input data as label data. Therefore, the auto-encoder may also be understood as a self-supervised learning neural network. The auto-encoder may be configured to: compress and recover data. For example, the encoder in the auto-encoder may compress (encode) data A to obtain data B, and the decoder in the auto-encoder may decompress (decode) the data B to recover the data A. Alternatively, it may be understood as that the decoder is an inverse operation of the encoder.

For example, as shown in FIG. 3, the encoder processes an input V to obtain a processed result z, and the decoder can decode the output z of the encoder into an expected output V'.

The AI model in embodiments of this application may include the encoder deployed on the terminal device and the decoder deployed on the network device.

### (3) Neural network (neural network, NN):

The neural network is a specific implementation form of AI or machine learning. According to a universal approximation theorem, the neural network can approximate any continuous function in theory, so that the neural network has a capability of learning any mapping.

The neural network may include a neuron. The neuron may be an operation unit that uses xₛ and an intercept of 1 as an input. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

An example in which a type of an AI model is a neural network is used. The AI model in this disclosure may be a deep neural network (deep neural network, DNN). Based on a network construction mode, the DNN may include a feedforward neural network (feedforward neural network, FNN), a convolutional neural network (convolutional neural network, CNN), a recurrent neural network (recurrent neural network, RNN), and the like.

The CNN is a neural network dedicated to processing data of a similar grid structure. For example, both time series data (timeline discrete sampling) and image data (two-dimensional discrete sampling) may be considered as the data of the similar grid structure. The CNN performs a convolution operation by capturing partial information through a window with a fixed size, instead of performing an operation by using all input information at one time. This greatly reduces a calculation amount of a model parameter. In addition, based on different types of information captured through the window (for example, a person and an object in a same image are information of different types), different convolution kernel operations may be used for each window, so that the CNN can better extract a feature of input data.

The RNN is a DNN network using feedback time series information. Inputs of the RNN include a new input value at a current moment and an output value of the RNN at a previous moment. The RNN is suitable for obtaining a series feature having a time correlation, and is especially suitable for applications such as speech recognition and channel encoding and decoding.

A characteristic of the FNN network is that every two neurons at adjacent layers are completely connected. Therefore, the FNN usually requires a large amount of storage space, leading to high computing complexity.

The FNN, the CNN, and the RNN are all constructed based on neurons. As described above, each neuron performs a weighted summation operation on input values of the neuron, and generates an output based on a weighted summation result by using a non-linear function. A weight for performing the weighted summation operation by the neuron in the neural network and the non-linear function are referred to as parameters of the neural network. Parameters of all neurons in a neural network form parameters of the neural network.

### (4) Training dataset and inference data:

In the machine learning field, a ground truth (ground truth) is usually considered as accurate data or true data.

The training dataset is used to train an AI model. The training dataset may include an input of the AI model, or include an input and a target output of the AI model. The training dataset includes one or more pieces of training data. The training data may include a training sample input to the AI model, or may include the target output of the AI model. The target output may also be referred to as a label, a sample label, or a label sample. The label is a ground truth.

In the communication field, the training dataset may include simulation data collected by a simulation platform, may include experimental data collected in an experiment scenario, or may include actual measurement data collected in an actual communication network. Because geographical environments and channel conditions in which data is generated are different, for example, indoor/outdoor environments, moving speeds, frequency bands, or antenna configurations are different, collected data may be classified when the data is obtained. For example, data with a same channel propagation environment and a same antenna configuration is classified into one type.

Model training is essentially learning some features of training data from the training data. During training of an AI model (for example, a neural network model), because an output of the AI model is expected to be as close as possible to a predicted value that is actually expected, a predicted value of a current network may be compared with a target value that is actually expected, and then a weight vector of each layer of the AI model is updated based on a difference between the predicted value and the target value (certainly, before a 1^{st} update, an initialization process is usually performed, to be specific, parameters are preconfigured for all layers of the AI model). For example, if the predicted value of the network is large, the weight vector is adjusted to decrease the predicted value, and adjustment is continuously performed until the AI model can predict the target value that is actually expected or a value that is quite close to the target value that is actually expected. Therefore, "how to obtain, through comparison, a difference between the predicted value and the target value" needs to be predefined. This is a loss function (loss function) or an objective function (objective function). The loss function and the objective function are important equations used to measure the difference between the predicted value and the target value. The loss function is used as an example. A larger output value (loss) of the loss function indicates a greater difference. In this case, the training of the AI model is a process of minimizing the loss, to make a value of the loss function be less than a threshold, or make a value of the loss function meet a target requirement. For example, the AI model is a neural network, and adjusting a model parameter of the neural network includes adjusting at least one of the following parameters: a quantity of layers of the neural network, a width of the neural network, a weight of a neuron, or a parameter in an activation function of a neuron.

The inference data may be used as an input for a trained AI model and used for inference by the AI model. During model inference, the inference data is input to the AI model to obtain a corresponding output, namely, an inference result.

### (5) AI model design:

The AI model design mainly includes a data collection phase (for example, collection of training data and/or inference data), a model training phase, and a model inference phase, and may further include an inference result application phase.

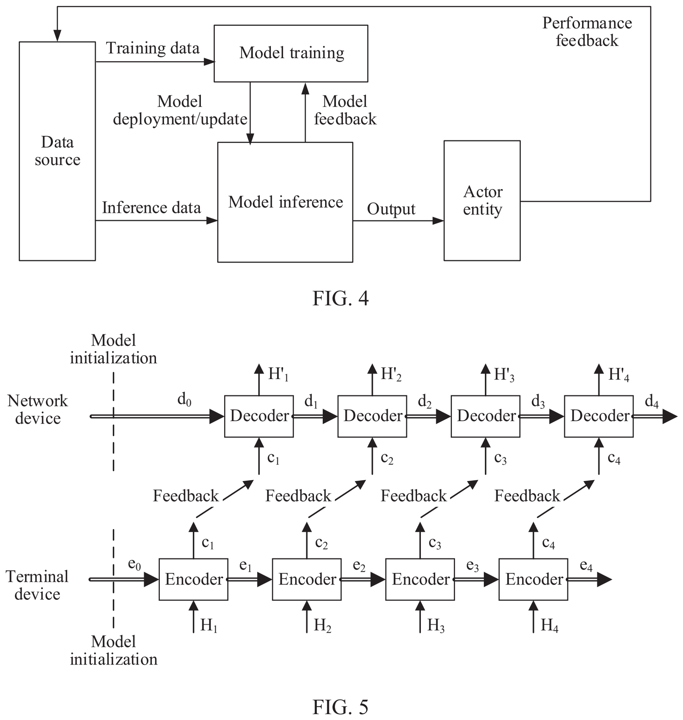

FIG. 4 shows an AI application framework.

In the foregoing data collection phase, a data source (data source) is used to provide a training dataset and inference data. In the model training phase, training data (training data) provided by the data source is analyzed or trained to obtain an AI model. The AI model represents a mapping relationship between an input and an output of the model. Obtaining the AI model through learning by using a model training node is equivalent to obtaining the mapping relationship between the input and the output of the model through learning by using the training data. In the model inference phase, the AI model obtained through training in the model training phase is used to perform inference based on the inference data provided by the data source, to obtain an inference result. This phase may also be understood as follows: The inference data is input to the AI model, to obtain an output by using the AI model, where the output is the inference result. The inference result may indicate a configuration parameter used (executed) by an actor object, and/or an operation performed by the actor object. The inference result is published in the inference result application phase. For example, the inference result may be planned by an actor (actor) entity in a unified manner. For example, the actor entity may send the inference result to one or more actor objects (for example, a network device or a terminal device) for execution. For another example, the actor entity may further feed back performance of the model to the data source, to facilitate subsequent model updating and training.

It may be understood that the communication system may include a network element with an AI function. The foregoing phases related to the AI model design may be performed by one or more network elements with the artificial intelligence function. In a possible design, the AI function (for example, an AI module or an AI entity) may be configured in an existing network element in the communication system, to implement an AI-related operation, for example, AI model training and/or inference. For example, the existing network element may be a network device, a terminal device, or the like. Alternatively, in another possible design, an independent network element may be introduced into the communication system to perform an AI-related operation, for example, AI model training. The independent network element may be referred to as an AI network element, an AI node, or the like. The name is not limited in embodiments of this application. For example, the AI network element may be directly connected to the network device in the communication system, or may be indirectly connected to the network device via a third-party network element. The third-party network element may be a core network element such as an authentication management function (authentication management function, AMF) network element or a user plane function (user plane function, UPF) network element, an operation, administration and maintenance (operation, administration and maintenance, OAM) network element, a cloud server, or another network element. This is not limited. For example, the independent network element may be deployed on one or more of a network device side, a terminal device side, or a core network side. Optionally, the independent network element may be deployed on a cloud server. For example, an AI network element 140 is introduced into the communication system shown in FIG. 2.

Training processes for different models may be deployed on different devices or nodes, or may be deployed on a same device or node. Inference processes for different models may be deployed on different devices or nodes, or may be deployed on a same device or node. For example, the terminal device completes a model training phase. After training an encoder and a decoder that match each other, the terminal device may send a model parameter of the decoder to the network device. For example, the network device completes a model training phase. After training an encoder and a decoder that match each other, the network device may indicate a model parameter of the encoder to the terminal device. For example, the independent AI network element completes a model training phase. After training an encoder and a decoder that match each other, the AI network element may send a model parameter of the encoder to the terminal device, and send a model parameter of the decoder to the network device. Further, a model inference phase corresponding to the encoder is performed in the terminal device, and a model inference phase corresponding to the decoder is performed in the network device.

The model parameter may include one or more of the following: a structure parameter of the model (for example, a quantity of layers and/or a weight of the model), an input parameter of the model (for example, an input dimension or a quantity of input ports), or an output parameter of the model (for example, an output dimension or a quantity of output ports). It may be understood that the input dimension may be a size of one piece of input data. For example, when the input data is a sequence, an input dimension corresponding to the sequence may indicate a length of the sequence. The quantity of input ports may be an amount of input data. Similarly, the output dimension may be a size of one piece of output data. For example, when the output data is a sequence, an output dimension corresponding to the sequence may indicate a length of the sequence. The quantity of output ports may be an amount of output data.

### (6) Channel state information:

In a communication system (for example, an LTE communication system or an NR communication system), a network device needs to determine, based on CSI, configurations such as a resource, an MCS, and precoding that are used to schedule a downlink data channel for a terminal device. It may be understood that the CSI is channel information, and is information that can reflect a channel feature or channel quality.

CSI measurement means that a receive end obtains channel information based on a reference signal sent by a transmit end, that is, estimates the channel information by using a channel estimation method. For example, the reference signal may include one or more of a channel state information reference signal (channel state information reference signal, CSI-RS), a synchronization signal/physical broadcast channel block (synchronizing signal/physical broadcast channel block, SSB), a channel sounding reference signal (sounding reference signal, SRS), a demodulation reference signal (demodulation reference signal, DMRS), or the like. The CSI-RS, the SSB, the DMRS, and the like may be used to measure downlink CSI. The SRS, the DMRS, and the like may be used to measure uplink CSI.

An FDD communication scenario is used as an example. In the FDD communication scenario, an uplink channel and a downlink channel are not reciprocal, or the reciprocity between an uplink channel and a downlink channel cannot be ensured. Therefore, the network device usually sends a downlink reference signal to the terminal device, and the terminal device performs channel measurement or interference measurement based on the received downlink reference signal to estimate downlink CSI. The terminal device generates a CSI report in a manner predefined in a protocol or in a manner configured by the network device, and feeds back the CSI report to the network device, so that the network device obtains the downlink CSI.

For example, the CSI may include at least one of the following: a channel quality indication (channel quality indication, CQI), a precoding matrix indicator (precoding matrix indicator, PMI), a rank indicator (rank indicator, RI), a CSI-RS resource indicator (CSI-RS resource indicator, CRI), a layer indicator (layer indicator, LI), reference signal received power (reference signal received power, RSRP), a signal to interference plus noise ratio (signal to interference plus noise ratio, SINR), or the like. The signal to interference plus noise ratio may also be referred to as a signal-to-interference-plus-noise ratio.

The RI indicates a quantity, recommended by the terminal device, of layers of downlink transmission. The CQI indicates a modulation and coding scheme, determined by the terminal device, that can be supported in a current channel condition. The PMI indicates precoding recommended by the terminal device. A quantity, indicated by the PMI, of layers of precoding corresponds to the RI.

As a scale of an antenna array in a MIMO system continuously increases, a quantity of antenna ports that can be supported increases, and dimensions of a corresponding channel matrix and precoding matrix increase. To enable the terminal device to estimate (measure) the downlink channel, overheads of delivering a reference signal by the network device increase. In addition, an error of approximately representing a large-scale channel matrix and precoding matrix by using a limited predefined codeword increases. A method for improving channel recovery precision is to increase a quantity of codewords in a codebook. However, this also increases overheads of CSI feedback (where one or more of a number corresponding to a codeword and a weighting coefficient are included), resulting in reducing available resources for data transmission and causing a system capacity loss.

An AI technology is introduced into the wireless communication network to obtain an AI model-based CSI feedback mode. The terminal device compresses and feeds back CSI by using an AI model, and the network device recovers compressed CSI by using an AI model. A sequence (for example, a bit sequence) is transmitted in AI-based CSI feedback, and overheads are lower than overheads of CSI in conventional CSI feedback. In addition, the AI model has a stronger non-linear feature extraction capability. In comparison with a conventional solution, channel information can be compressed and represented more effectively, and a channel can be recovered more effectively based on feedback information.

FIG. 3 is used as an example. An encoder in FIG. 3 may be a CSI generator, and a decoder may be a CSI reconstructor. The encoder may be deployed on the terminal device, and the decoder may be deployed on the network device. The terminal device may generate CSI feedback information z based on CSI raw information V by using an encoder. The terminal device reports a CSI report, where the CSI report may include the CSI feedback information z. The network device may reconstruct CSI information by using the decoder to obtain CSI recovery information V'.

The CSI raw information V may be obtained by the terminal device through CSI measurement. For example, the CSI raw information V may include a channel response of a downlink channel or an eigenvector matrix (a matrix including eigenvectors) of a downlink channel. The encoder processes the eigenvector matrix of the downlink channel, to obtain the CSI feedback information z. In other words, performing a compression operation and/or a quantization operation on an eigenmatrix based on a codebook in a related solution is replaced with the operation of processing the eigenmatrix by the encoder to obtain the CSI feedback information z. The terminal device reports the CSI feedback information z. The network device processes the CSI feedback information z by using a decoder, to obtain the CSI recovery information V'.

The following further describes examples of a training process and an inference process for the AI model in embodiments of this application.

Training data for training the AI model includes a training sample and a sample label. For example, the training sample is channel information measured by the terminal device, and the sample label is real channel information, namely, ground truth CSI. When the encoder and the decoder belong to a same auto-encoder, the training data may include only the training sample, in other words, the training sample is the sample label.

In the wireless communication field, the ground truth CSI may be high-precision CSI.

A specific training process is as follows: A model training node processes channel information, namely, the training sample, by using the encoder, to obtain CSI feedback information; processes the feedback information by using the decoder, to obtain recovered channel information, namely, CSI recovery information; and then calculates a difference between the CSI recovery information and a corresponding sample label, that is, a value of a loss function, and updates parameters of the encoder and the decoder based on the value of the loss function, to minimize the difference between the recovered channel information and the corresponding sample label, that is, minimize the loss function. For example, the loss function may be a smallest mean square error (mean square error, MSE) or a cosine similarity. The foregoing operations may be repeated to obtain an encoder and a decoder that meet a target requirement. The model training node may be the terminal device, the network device, or another network element with an AI function in the communication system.

Frequent packet losses of the CSI feedback information severely affect feedback performance, that is, affect accuracy of channel information recovery on the network device side. The following uses time-domain correlation-based CSI feedback as an example for description.

In a wireless communication link, channels of medium-low speed users change continuously in time. Therefore, feedback performance may be improved by mining a channel time-domain correlation. For example, channel information compression is implemented by mining a time-domain correlation between a historical channel measurement result and a current channel measurement result. This helps reduce overheads of feeding back channel information and reduce an information loss in a compression process. The terminal device and the network device may separately perform compression feedback and recovery of the channel information by using the time-domain correlation.

FIG. 5 is a diagram of a time-domain correlation-based CSI feedback procedure. In a time-domain correlation-based CSI feedback scenario, when CSI feedback information is generated on a terminal device side, the CSI feedback information is not only related to a current channel measurement result, but also related to a channel measurement result at a historical moment. When channel information is recovered on a network device side, recovered channel information is not only related to current CSI feedback information, but also related to CSI feedback information at a historical moment.

A time-domain correlation-based two-side model is deployed on a terminal device and a network device, to implement time-domain correlation-based CSI feedback. FIG. 3 is used as an example. An AI model deployed on the terminal device may be an encoder, and an AI model deployed on the network device may be a decoder. The following uses this as an example to describe the feedback procedure shown in FIG. 5.

The terminal device side performs channel measurement on a reference signal Rt, to obtain a channel measurement result at a current moment. As shown in FIG. 5, an example in which CSI raw information is a channel measurement result is used. CSI raw information at a current moment is a channel measurement result Ht at the current moment. The channel measurement result Ht at the current moment is input to the encoder, and the encoder outputs CSI feedback information ct. The output of the encoder is related to the channel measurement result Ht at the current moment and state information eₜ₋₁ of the encoder. The state information eₜ₋₁ of the encoder is determined based on a historical input of the encoder. As shown in FIG. 5, the historical input of the encoder may include a channel measurement result at a historical moment. Therefore, a time-domain correlation of channel information may be mined based on Ht and eₜ₋₁. As shown in FIG. 5, t=1, 2, 3, or 4. On the network device side, the CSI feedback information ct at the current moment is input to the decoder, and the decoder outputs CSI recovery information H't, namely, channel information corresponding to the reference signal Rt. The output of the decoder is related to the CSI feedback information ct at the current moment and state information dₜ₋₁ of the decoder. The state information dₜ₋₁ of the decoder is determined based on historical input of the decoder. As shown in FIG. 5, the historical input of the decoder may include CSI feedback information at a historical moment. Therefore, a time-domain correlation of channel information may be mined based on ct and dₜ₋₁. To ensure feedback performance, the state information on the network device side and the state information on the terminal device side need to be kept updated synchronously. As shown in FIG. 5, in addition to outputting the CSI feedback information ct, the encoder further updates the state information on the terminal device side. In addition to outputting the CSI recovery information H't, the decoder further updates the state information on the network device side. In this way, the state information on the network device side and the state information on the terminal device side are synchronously updated.

The following provides descriptions by using an example. The network device sends a reference signal R₃ to the terminal device. The terminal device performs channel measurement on the reference signal R₃, to obtain a channel measurement result H₃. The channel measurement result H₃ is input to the encoder of the terminal device. The encoder obtains CSI feedback information c₃ based on the channel measurement result H₃ and state information e₂ of the encoder, and updates the state information of the encoder to obtain state information e₃. The reference signal R₃ is a reference signal corresponding to the CSI feedback information c₃. The network device receives the CSI feedback information c₃, and inputs the CSI feedback information c₃ to the decoder of the network device. The decoder obtains CSI recovery information H'₃ based on the CSI feedback information c₃ and state information d₂ of the decoder, and updates the state information of the decoder to obtain state information d₃. The CSI recovery information H'₃ is channel information corresponding to the CSI feedback information c₃, or the CSI recovery information H'₃ is channel information corresponding to the reference signal R₃. The network device sends a reference signal R₄ to the terminal device. The terminal device performs channel measurement on the reference signal R₄, to obtain a channel measurement result H₄. The channel measurement result H₄ is input to the encoder of the terminal device. The encoder obtains the CSI feedback information c₄ based on the channel measurement result H₄ and state information e₃, and updates the state information to obtain state information e4. The reference signal R₄ is a reference signal corresponding to the CSI feedback information c₄. The network device receives the CSI feedback information c₄, and inputs the CSI feedback information c₄ to the decoder of the network device. The decoder obtains CSI recovery information H'₄ based on the CSI feedback information c₄ and state information d₃ of the decoder, and updates the state information of the decoder to obtain state information d₄. The CSI recovery information H'₄ is channel information corresponding to the CSI feedback information c₄, or the CSI recovery information H'₄ is channel information corresponding to the reference signal R₄.

A reference signal R₃ is used as a reference, and a reference signal received before the terminal device receives the reference signal R₃ is a historical reference signal. A reference signal R₄ is used as a reference, and a reference signal received before the terminal device receives the reference signal R₄ is a historical reference signal, for example, R₃. State information of the encoder is determined based on a historical input of the encoder, and the historical input of the encoder may include a channel measurement result of the historical reference signal. For example, as shown in FIG. 5, the state information e₄ is obtained through update based on the channel measurement result H₃. CSI feedback information c₃ is used as a reference, and CSI feedback information received before the network device receives the CSI feedback information c₃ is historical CSI feedback information. CSI feedback information c₄ is used as a reference, and CSI feedback information received before the network device receives the CSI feedback information c₄ is historical CSI feedback information, for example, c₃. State information of the decoder is determined based on a historical input of the decoder, and the historical input of the decoder may include historical CSI feedback information. For example, as shown in FIG. 5, the state information d₄ is obtained through update based on the CSI feedback information c₃.

When the CSI feedback information fails to be transmitted due to a poor channel transmission condition or the like, the network device cannot synchronously update the state information on the network device side.

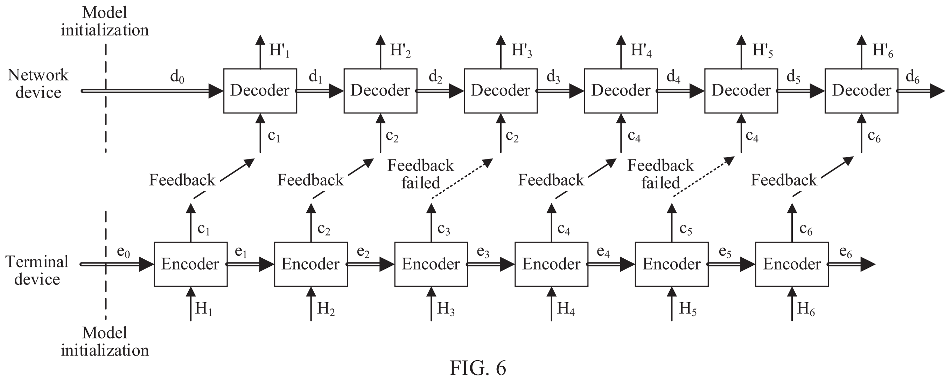

FIG. 6 is a diagram of another time-domain correlation-based CSI feedback procedure. As shown in FIG. 6, when feedback transmission fails, a decoder may perform processing based on CSI feedback information received last time. For example, a terminal device inputs channel measurement result H₃ to an encoder. The encoder outputs the CSI feedback information c₃ based on the channel measurement result H₃ and state information e₂, and updates the state information to obtain state information e₃. The state information e₃ may be used in a next CSI feedback procedure. When the CSI feedback information c₃ fails to be reported, the network device inputs, to the decoder, CSI feedback information c₂ received last time. The decoder outputs CSI recovery information H'₃ based on the CSI feedback information c₂ and state information d₂. Because the CSI feedback information c₃ is not received, the network device cannot normally update the state information. The state information d₃ and subsequent state information of the decoder in FIG. 6 are different from the state information d₃ obtained through update based on the CSI feedback information c₃ and the subsequent state information of the decoder in FIG. 5. The CSI recovery information H'₃ obtained through decoding and subsequent CSI recovery information in FIG. 6 are different from the CSI recovery information H'₃ and the subsequent CSI recovery information in FIG. 5. Accuracy of the CSI recovery information H'₃ obtained through decoding and the subsequent CSI recovery information in FIG. 6 is lower than that of the CSI recovery information H'₃ and the subsequent CSI recovery information in FIG. 5.

After a packet loss occurs, state information on a network device side cannot be synchronously updated with state information on a terminal device side. There is a difference between the state information on the terminal device side and the state information on the network device side, that is, a matching degree between the encoder and the decoder decreases. In other words, when the feedback transmission fails, the terminal device updates state information on a terminal device side, but the network device cannot update state information on a network device side. As a result, a quantity of times of updating the state information on the network device side is inconsistent with a quantity of times of updating the state information on the terminal device side, and consequently, there is a difference between the state information on the terminal device side and the state information on the network device side, that is, a matching degree between the encoder and the decoder decreases.

Due to the difference between the state information on the terminal device side and the state information on the network device side, the decoder cannot recover accurate channel information, resulting in a performance loss. In addition, the difference between the state information on the terminal device side and the state information on the network device side increases as a quantity of packet loss times increases. This may cause a mismatch in a subsequent two-side processing process, resulting in continuous deterioration of feedback performance.

In view of this, this application provides a communication method and a communication apparatus, to help ensure feedback performance in a case of frequent packet losses of CSI feedback information. The communication method may be applied to the foregoing communication system, for example, the FDD communication scenario. In addition, optionally, the communication method may alternatively be applied to a TDD communication scenario. This is not limited in this disclosure.

It should be understood that in this application, an indication includes a direct indication (which is also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, pre-stored, pre-burned, or preconfigured.

It should be understood that, in this application, that information C is used to determine information D includes that the information D is determined only based on the information C, and also includes that the information D is determined based on the information C and other information. In addition, that information C is used to determine information D may further include an indirect determining case. For example, the information D is determined based on information E, and the information E is determined based on the information C.

In addition, in embodiments of this application, "a network element A sends information A to a network element B" may be understood as that a destination end of the information A or an intermediate network element in a transmission path to the destination end is the network element B, and may include directly or indirectly sending the information to the network element B. "The network element B receives the information A from the network element A" may be understood as that a source end of the information A or an intermediate network element in a transmission path from the source end is the network element A, and may include directly or indirectly receiving the information from the network element A. Information may be necessarily processed between the source end for sending the information and the destination end, for example, a format change. However, the destination end may understand valid information from the source end. Similar descriptions in this application may be understood similarly, and details are not described herein.

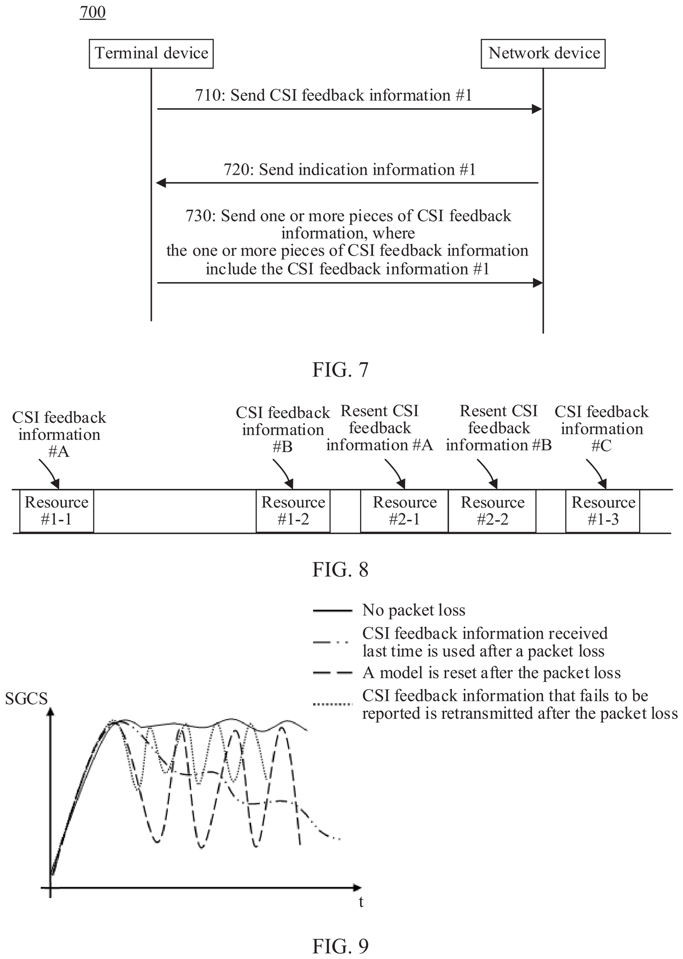

FIG. 7 is a schematic flowchart of a communication method according to this application.

As shown in FIG. 7, the method 700 may include the following steps.

710: A terminal device sends CSI feedback information #1 (an example of first CSI feedback information) to a network device.

720: The network device sends indication information #1 (an example of first indication information) to the terminal device.

The indication information #1 indicates the terminal device to send one or more pieces of CSI feedback information to the network device, and the one or more pieces of CSI feedback information include the CSI feedback information #1.

730: The terminal device sends the one or more pieces of CSI feedback information to the network device based on the indication information #1.

The one or more pieces of CSI feedback information include CSI feedback information previously sent by the terminal device, for example, the CSI feedback information #1.

In other words, in the method 700, the network device sends the indication information #1 to the terminal device, to indicate the terminal device to resend the previously sent CSI feedback information.

The CSI feedback information previously sent by the terminal device may include at least one of the following: CSI feedback information that fails to be reported or CSI feedback information that is successfully reported.

The one or more pieces of CSI feedback information may include only the CSI feedback information previously sent by the terminal device. Alternatively, the one or more pieces of CSI feedback information may further include CSI feedback information that has not been sent by the terminal device.

That the CSI feedback information fails to be reported means that a packet loss of the CSI feedback information occurs, and the network device does not obtain the CSI feedback information sent by the terminal device. A quantity of pieces of CSI feedback information that fails to be reported is a quantity of packet loss times of CSI feedback information. The one or more pieces of CSI feedback information may be referred to as one or more packets. The CSI feedback information may also be referred to as a CSI feedback bit. The CSI feedback information is indicated by a CSI report. One piece of feedback information corresponds to one CSI report. For ease of description, in embodiments of this application, the CSI feedback information may also be briefly referred to as feedback information.

For example, the CSI feedback information may be sent by using uplink control information (uplink control information, UCI), that is, the UCI includes content of the CSI feedback information.

Optionally, the method 700 may further include step 701 (not shown in the figure).

701: The network device sends uplink resource configuration information #1 (an example of first uplink resource configuration information) to the terminal device, where the uplink resource configuration information #1 indicates an uplink resource #1 (an example of a first uplink resource) used to transmit the CSI feedback information #1.

In this case, step 710 may include: The terminal device sends the CSI feedback information #1 to the network device on the uplink resource #1.

Step 720 may include: The network device sends the indication information #1 and uplink resource configuration information #2 (an example of second uplink resource configuration information) to the terminal device, where the uplink resource configuration information #2 indicates an uplink resource #2 (an example of a second uplink resource) used to transmit the one or more pieces of CSI feedback information.

In this case, step 730 may include: The terminal device sends the one or more pieces of CSI feedback information on the uplink resource #2.

In the solution in this embodiment of this application, a CSI feedback information resending mechanism is introduced. To be specific, the network device may indicate the terminal device to backhaul previously sent CSI feedback information. This helps avoid a problem that feedback performance deteriorates because CSI feedback information fails to be reported.

The following describes the indication information #1 by using examples.

In a possible implementation, the indication information #1 may be used to determine the one or more pieces of CSI feedback information.

For example, the indication information #1 may be carried in downlink control information (downlink control information, DCI).

In an example, the indication information #1 may indicate the one or more pieces of CSI feedback information.

For example, specific CSI feedback information specifically included in the one or more pieces of CSI feedback information may be determined by the network device, and notified to the terminal device.

Optionally, the indication information #1 may indicate at least one of the following:
an identifier of the one or more pieces of CSI feedback information;
an identifier of a reference signal corresponding to the one or more pieces of CSI feedback information; or
time period #1 (an example of a first time period). The time period #1 is before a sending moment of the indication information #1. A sending moment of the one or more pieces of CSI feedback information is within the time period #1.

The indication information #1 may notify, by indicating at least one of the foregoing items, the terminal device of the specific CSI feedback information that needs to be sent.

For example, the identifier of the CSI feedback information may be an index of the CSI feedback information.

For example, the identifier of the reference signal may be an index of the reference signal.

That the time period #1 is before a sending moment of the indication information #1 may mean that an end moment of the time period #1 is before the sending moment of the indication information #1. In this case, the one or more pieces of CSI feedback information are one or more pieces of CSI feedback information previously sent by the terminal device. The network device may indicate, by using the indication information #1, the terminal device to resend all CSI feedback information that has been sent within the time period #1.

For example, the one or more pieces of CSI feedback information indicated by the indication information #1 may be the CSI feedback information that fails to be reported.

In this way, the terminal device may backhaul the CSI feedback information that fails to be reported.

In an example, the indication information #1 may indicate K pieces of CSI feedback information including the one or more pieces of CSI feedback information. K is a positive integer.

For example, specific CSI feedback information specifically included in the one or more pieces of CSI feedback information may be determined by the terminal device. The network device may indicate the K pieces of CSI feedback information, and the terminal device may determine, from the K pieces of CSI feedback information, specific CSI feedback information to be reported.

Optionally, the indication information #1 may indicate at least one of the following:
identifiers of K pieces of CSI feedback information;
identifiers of reference signals corresponding to the K pieces of CSI feedback information; or
a time period #2 (an example of the first time period). A sending moment of the K pieces of CSI feedback information is within the time period #2, and the time period #2 is before the sending moment of the indication information #1.

The indication information #1 may, by indicating at least one of the foregoing items, notify the terminal device of a set of CSI feedback information that can be sent, and the terminal device may select, from the set of CSI feedback information, specific CSI feedback information that needs to be sent.

That the time period #2 is before the sending moment of the indication information #1 may mean that an end moment of the time period #2 is before the sending moment of the indication information #1. In this case, the K pieces of CSI feedback information are K pieces of CSI feedback information previously sent by the terminal device. A quantity of pieces of all CSI feedback information sent by the terminal device in the time period #2 is K.

For example, the K pieces of CSI feedback information indicated by the indication information #1 may be the CSI feedback information that fails to be reported.

In this way, the terminal device may backhaul the CSI feedback information that fails to be reported.

For example, a quantity of pieces of the one or more pieces of CSI feedback information may be determined by the network device. For example, the indication information #1 may further indicate the quantity of pieces of the one or more pieces of CSI feedback information.

For example, the quantity of pieces of the one or more pieces of CSI feedback information may be autonomously determined by the terminal device.

For example, the quantity of pieces of the one or more pieces of CSI feedback information may be predefined. For example, the quantity of pieces of the one or more pieces of CSI feedback information is predefined according to a calculation rule for predefining the quantity of pieces of the one or more pieces of CSI feedback information. For example, the quantity of pieces of the one or more pieces of CSI feedback information may be predefined as a minimum integer whose ratio to K is greater than or equal to a threshold #2. For another example, a specific value of the quantity of pieces of the one or more pieces of CSI feedback information is predefined.

The one or more pieces of CSI feedback information may be determined in a plurality of manners.

For example, the one or more pieces of CSI feedback information may be one or more pieces of CSI feedback information that are in the K pieces of CSI feedback information and that are nearest from the current moment. Alternatively, the one or more pieces of CSI feedback information may be one or more pieces of CSI feedback information that are in the K pieces of CSI feedback information and that are farthest from the current moment.

For example, reporting moments of the K pieces of CSI feedback information may be represented as CSI feedback information 1, CSI feedback information 2, ..., and CSI feedback information K according to a sequence of moments from far to near from the current moment. The k pieces of CSI feedback information nearest from the current moment may include CSI feedback information K-k+1, CSI feedback information K-k+2, ..., and CSI feedback information K. The k pieces of CSI feedback information farthest from the current moment may include CSI feedback information 1, CSI feedback information 2, ..., and CSI feedback information k. k is a positive integer less than or equal to K.

For example, the one or more pieces of CSI feedback information may be one or more pieces of CSI feedback information randomly selected from the K pieces of CSI feedback information.

It should be understood that the foregoing is merely an example, and the one or more pieces of CSI feedback information may alternatively be determined in another manner. This is not limited in embodiments of this application.

When the one or more pieces of CSI feedback information are autonomously determined by the terminal device, the terminal device may notify the network device of specific CSI feedback information included in the one or more pieces of CSI feedback information.

For example, the method 700 may further include: The terminal device sends indication information #2 to the network device, where the indication information #2 indicates the one or more pieces of CSI feedback information.

For example, the indication information #2 may include an identifier of the one or more pieces of CSI feedback information. For example, one or more CSI reports each carry the identifier of the one or more pieces of CSI feedback information.

For another example, the one or more pieces of CSI feedback information may be a plurality of pieces of consecutive CSI feedback information in the one or more pieces of CSI feedback information, and the indication information #2 may include one or more of the following information: a start number of the one or more pieces of CSI feedback information, a quantity of pieces of the one or more pieces of CSI feedback information, or an end number. A part that is in the one or more items and that is not indicated by the indication information #2 may be obtained in another manner, for example, predefined according to a protocol. A number of each of the one or more pieces of CSI feedback information may indicate a location of the CSI feedback information in the K pieces of CSI feedback information.

For another example, the indication information #2 may include the identifier of the reference signal corresponding to the one or more pieces of CSI feedback information.

For another example, the indication information #2 may include a bitmap (bitmap) of the one or more pieces of CSI feedback information. For example, the one or more pieces of CSI feedback information are transmitted by using the UCI, and a segment of bitmap is reserved at a start location in the UCI, to indicate the one or more pieces of CSI feedback information in the K pieces of feedback information.

For another example, the indication information #2 may indicate the time period #1.

It should be understood that the foregoing is merely an example, and the indication information #2 may alternatively indicate the one or more pieces of CSI feedback information in another manner. This is not limited in embodiments of this application.

In another possible implementation, the indication information #1 is used to trigger the terminal device to send the one or more pieces of CSI feedback information to the network device. That is, the indication information #1 may be used only to trigger step 730, and is not used to determine the one or more pieces of CSI feedback information.

In this case, the one or more pieces of CSI feedback information may be predefined.

For example, the one or more pieces of CSI feedback information may be one or more pieces of sent CSI feedback information nearest from the current moment. That is, after receiving the indication information #1, the terminal device may resend the one or more pieces of CSI feedback information nearest from the current moment.

The CSI feedback information is determined based on a channel measurement result of a reference signal.

For example, the reference signal may be any one of a CSI-RS, an SSB, or a DMRS.

For example, the reference signal may be a periodically sent reference signal, or may be an aperiodically sent reference signal.

For example, the uplink resource configuration information #1 may indicate a periodic uplink resource configured by the network device.

The periodic uplink resource may be used to transmit the CSI feedback information. That is, the periodic uplink resource includes the uplink resource #1 used to transmit the CSI feedback information #1.

For example, the uplink resource configuration information #1 may indicate an uplink resource scheduled by the network device. The uplink resource is an aperiodic uplink resource. The uplink resource includes the uplink resource #1 used to transmit the CSI feedback information #1.

For example, the uplink resource configuration information #2 may indicate an uplink resource scheduled by the network device. The uplink resource may include the uplink resource #2 used to transmit the one or more pieces of CSI feedback information.

For example, the one or more pieces of CSI feedback information may include CSI feedback information #A and CSI feedback information #B that have been sent by the terminal device. The terminal device may send the CSI feedback information #A and the CSI feedback information #B on the uplink resource #2.

For another example, the one or more pieces of CSI feedback information may include CSI feedback information #A that has been sent by the terminal device and CSI feedback information #C that has not been fed back. The terminal device may send the CSI feedback information #A and the CSI feedback information #C on the uplink resource #2.

Optionally, a resource quantity for an uplink resource that is in the uplink resource #2 and that is used to transmit the CSI feedback information #1 is greater than a resource quantity for the uplink resource #1.

That is, the network device indicates to increase an uplink resource to send the one or more pieces of CSI feedback information.

For example, the network device may preferentially increase an uplink control channel element (control channel element, CCE) resource of the terminal device.

FIG. 8 is a diagram of an uplink resource.

For example, as shown in FIG. 8, the uplink resource configuration information #1 may indicate a periodic uplink resource configured by the network device. The terminal device sends CSI feedback information #A on a resource #1-1 in the periodic uplink resource, and sends CSI feedback information #B on a resource #1-2. The one or more pieces of CSI feedback information may include the CSI feedback information #A and the CSI feedback information #B. The terminal device sends the CSI feedback information #A on a resource #2-1 in the uplink resource #2 indicated by the uplink resource configuration information #2, and sends the CSI feedback information #B on a resource #2-2. A resource quantity s for the resource #1-1 is less than a resource quantity for the resource #2-1. A resource quantity for the resource #1-2 is less than a resource quantity for the resource #2-2. In addition, the terminal device may further continue to send CSI feedback information on the periodic uplink resource configured by the network device, for example, report CSI feedback information #C.

A packet loss is usually caused because a current uplink channel condition is insufficient to support transmission of CSI feedback information. In the solution in this embodiment of this application, the network device may adjust a configuration of a time-frequency domain resource to increase the uplink resource, to improve a channel transmission condition. This helps ensure successful transmission of the one or more pieces of CSI feedback information. For example, the one or more pieces of CSI feedback information may be the previously sent CSI feedback information, and the network device may indicate the terminal device to increase the uplink resource. This helps ensure that the terminal device can successfully backhaul the one or more pieces of CSI feedback information.

Optionally, before step 720, the method 700 may further include step 711 (not shown in the figure).

Step 711: The network device sends indication information #3 (an example of second indication information) to the terminal device, where the indication information #3 indicates to increase uplink transmit power.

In the solution in this embodiment of this application, the network device may indicate the terminal device to increase the uplink transmit power, to improve a channel transmission condition. This helps ensure successful transmission of the one or more pieces of CSI feedback information. For example, the one or more pieces of CSI feedback information may be the previously sent CSI feedback information, and the network device may indicate the terminal device to increase the uplink transmit power. This helps ensure that the terminal device can successfully backhaul the one or more pieces of CSI feedback information.

The following describes an application scenario of the method 700 by using an example.

For example, the method 700 may be applied to a time-domain correlation-based CSI feedback scenario.

In the time-domain correlation-based feedback scenario, CSI feedback information corresponding to a reference signal is determined based on a channel measurement result of the reference signal and a channel measurement result of a historical reference signal relative to the reference signal.

A historical reference signal relative to a reference signal includes a reference signal received before the terminal device receives the reference signal.

In other words, CSI feedback information that is for a specific reference signal and that is generated by the terminal device is not only related to a channel measurement result at a current moment (namely, a measurement result of the reference signal), but also related to a channel measurement result at a past moment.

In the time-domain correlation-based feedback scenario, channel information corresponding to CSI feedback information is determined based on the CSI feedback information and historical CSI feedback information relative to the CSI feedback information.

Historical CSI feedback information relative to CSI feedback information includes CSI feedback information received before the network device receives the CSI feedback information.

In other words, channel information that is for a specific reference signal and that is recovered by the network device is not only related to currently received CSI feedback information (namely, CSI feedback information corresponding to the reference signal), but also related to CSI feedback information received at a past moment.

Time-domain correlation based CSI feedback may be implemented through AI CSI two-side compression feedback. Specifically, a time-domain correlation-based two-side model is deployed on the terminal device and the network device, to implement CSI feedback. The time-domain correlation-based two-side model includes an AI model deployed on the terminal device and an AI model deployed on the network device. The AI model deployed on the terminal device matches the AI model deployed on the network device. For example, the AI model deployed on the terminal device may be an encoder, and the AI model deployed on the network device may be a decoder. An output of the encoder is related to a current input of the encoder and a historical input of the encoder. An output of the decoder is related to a current input of the decoder and a historical input of the decoder.

The encoder may be referred to as an enhanced spatial-frequency joint CSI compression encoder model. The decoder may be referred to as an enhanced spatial-frequency joint CSI compression decoder model. For example, the two-side model may be an enhanced spatial-frequency joint CSI compression model. For example, an architecture design of the two-side model may use any one of a transformer (Transformer), an RNN, a CNN, a long short-term memory (long short-term memory, LSTM) network, or the like. Alternatively, the two-side model may be another self-constructed AI model.

For example, the time-domain correlation-based two-side model includes a decoder #1 (an example of a first AI model) deployed on the network device and an encoder #1 (an example of a second AI model) deployed on the terminal device. The encoder #1 and the decoder #1 are matched. The following uses this scenario as an example to describe a time-domain correlation-based CSI feedback procedure.

For a reference signal, an input of the encoder #1 includes CSI raw information. The CSI raw information may be a channel measurement result of the reference signal.

For example, a type of the CSI raw information may be any one of the following: a channel response, an eigenvector matrix of a channel, a precoding matrix, or the like.

The channel response may also be referred to as a channel matrix. The eigenvector matrix of the channel is a matrix including eigenvectors of the channel.

An output of the encoder #1 includes CSI feedback information corresponding to the reference signal. Alternatively, the CSI feedback information corresponding to the reference signal may be obtained based on the output of the encoder #1. For example, an output result of the encoder #1 is quantized, to obtain the CSI feedback information corresponding to the reference signal. For ease of description, in this embodiment of this application, an example in which the output of the encoder includes the CSI feedback information is mainly used for description, and constitutes no limitation on the solutions in embodiments of this application.

The output of the encoder #1 is related to a current input and a historical input of the encoder #1. The current input includes the channel measurement result of the reference signal. The historical input includes a channel measurement result of a historical reference signal received before a receiving moment of the reference signal.

When the network device receives the CSI feedback information, an input of the decoder #1 includes the CSI feedback information. Alternatively, an input of the decoder #1 is determined based on the CSI feedback information. For example, the CSI feedback information may be obtained by quantizing the output result of the encoder #1. Before the CSI feedback information is input to the decoder #1, the CSI feedback information may be dequantized. For ease of description, in this embodiment of this application, an example in which the input of the decoder includes the CSI feedback information is mainly used for description, and constitutes no limitation on the solutions in embodiments of this application.

An output of the decoder #1 includes channel information corresponding to the CSI feedback information. The output of the decoder #1 is related to a current input and a historical input of the decoder #1. The current input includes the CSI feedback information. The historical input includes historical CSI feedback information received before a receiving moment of the CSI feedback information.

When the network device does not receive the CSI feedback information at the expected receiving moment of the CSI feedback information, the current CSI feedback information fails to be reported. The input of the decoder #1 may include a last piece of historical CSI feedback information received before the expected receiving moment of the CSI feedback information, that is, CSI feedback information received last time. The output of the decoder #1 includes channel information corresponding to the CSI feedback information that fails to be reported. The output of the decoder #1 is related to a current input and a historical input of the decoder #1. The current input includes a last piece of historical CSI feedback information received before the expected receiving moment of the CSI feedback information. The historical input includes historical CSI feedback information received before an expected receiving moment of the CSI feedback information.

The following uses the CSI feedback information #1 as an example for description.

The network device sends a reference signal #1 to the terminal device. The terminal device performs channel measurement on the reference signal #1, to obtain a channel measurement result of the reference signal #1. The channel measurement result of the reference signal #1 (an example of a first reference signal) is input to the encoder #1. The encoder #1 outputs the CSI feedback information #1. Alternatively, an output of the encoder #1 is processed to obtain the CSI feedback information #1. The output of the encoder #1 is related to the channel measurement result of the reference signal #1 and a historical input #1 of the encoder #1 (an example of a first historical input of the second AI model). The historical input #1 of the encoder #1 includes a channel measurement result of a historical reference signal #1 (an example of a first historical reference signal). A receiving moment of the historical reference signal #1 is earlier than a receiving moment of the reference signal #1. In other words, a sending moment of the historical reference signal #1 is earlier than a sending moment of the reference signal #1. The terminal device sends the CSI feedback information #1 to the network device.

When receiving the CSI feedback information #1, the network device inputs the CSI feedback information #1 to the decoder #1. Alternatively, the CSI feedback information #1 is processed and then input to the decoder #1. The decoder #1 outputs channel information corresponding to the CSI feedback information #1, namely, channel information corresponding to the reference signal #1. The output of the decoder #1 is related to the CSI feedback information #1 and a historical input #1 of the decoder #1 (an example of a first historical input of the first AI model). The historical input #1 of the decoder #1 includes historical CSI feedback information #1 (an example of first historical CSI feedback information) or is based on the historical CSI feedback information #1. A receiving moment of the historical CSI feedback information #1 is earlier than a receiving moment of the CSI feedback information #1. In other words, a sending moment of the historical CSI feedback information #1 is earlier than a sending moment of the CSI feedback information #1. In other words, a sending moment of a reference signal corresponding to the historical CSI feedback information #1 is earlier than the sending moment of the reference signal #1.

When the network device does not successfully receive the CSI feedback information #1, the network device inputs, to the decoder, CSI feedback information received before the expected receiving moment of the CSI feedback information #1, for example, inputs the historical CSI feedback information #1 to the decoder #1. The decoder #1 outputs channel information corresponding to the CSI feedback information #1, namely, channel information corresponding to the reference signal #1.

Alternatively, the time-domain correlation-based CSI feedback procedure may be understood in the following manner.

The output of the encoder #1 is related to the input of the encoder #1 and state information of the encoder #1. The output of the decoder #1 is related to the input of the decoder #1 and state information of the decoder #1.

That is, CSI feedback information may be determined based on the input of the encoder #1 and the state information of the encoder #1, and channel information corresponding to the CSI feedback information may be determined based on the input of the decoder #1 and the state information of the decoder #1.

The state information of the encoder #1 is determined based on a historical input of the encoder #1. Alternatively, the state information of the encoder #1 is initial state information of the encoder #1. For example, if the current encoder #1 has no historical input, the state information of the current encoder #1 may be the initial state information. The state information of the decoder #1 is determined based on a historical input of the decoder #1. Alternatively, the state information of the decoder #1 is initial state information of the decoder #1. For example, if the current decoder #1 has no historical input, the state information of the current decoder #1 may be the initial state information.

The input of the encoder #1 includes a channel measurement result of a reference signal. The output of the encoder #1 includes CSI feedback information corresponding to the reference signal, or is based on the output of the encoder #1. The output of the encoder #1 is related to the current input and current state information of the encoder #1. The current input includes the channel measurement result of the reference signal. The current state information of the encoder #1 is determined based on a historical input of the encoder #1. The historical input includes a channel measurement result of a historical reference signal received before a receiving moment of the reference signal. Alternatively, the current state information of the encoder #1 may be initial state information. For example, if the reference signal is a 1^{st} reference signal sent by the network device to the terminal device, the encoder #1 has no historical input, and the current state information is the initial state information.

When the network device receives CSI feedback information, the input of the decoder #1 includes the CSI feedback information, or is based on the CSI feedback information. The output of the decoder #1 includes channel information corresponding to the CSI feedback information. The output of the decoder #1 is related to the current input and current state information of the decoder #1. The current input includes the CSI feedback information. The current state information of the decoder #1 is determined based on a historical input of the decoder #1. The historical input includes historical CSI feedback information received before a receiving moment of the CSI feedback information. Alternatively, the current state information of the decoder #1 may be initial state information. For example, if the reference signal is a 1^{st} reference signal sent by the network device to the terminal device, the decoder #1 has no historical input, and the current state information is the initial state information.

When the network device does not receive the CSI feedback information at the expected receiving moment of the CSI feedback information, the current CSI feedback information fails to be reported. The input of the decoder #1 may include a last piece of historical CSI feedback information received before the expected receiving moment of the CSI feedback information, that is, CSI feedback information received last time. The output of the decoder #1 includes channel information corresponding to the CSI feedback information that fails to be reported. The output of the decoder #1 is related to the current input and current state information of the decoder #1. The current input includes a last piece of historical CSI feedback information received before the expected receiving moment of the CSI feedback information. The current state information is determined based on a historical input of the decoder #1. The historical input includes historical CSI feedback information received before an expected receiving moment of the CSI feedback information.

The following uses the CSI feedback information #1 as an example for description.

The channel measurement result of the reference signal #1 is input to the encoder #1. The encoder #1 outputs the CSI feedback information #1 based on the channel measurement result of the reference signal #1 and state information #1 of the encoder #1. Alternatively, an output of the encoder #1 is processed to obtain the CSI feedback information #1. The state information #1 of the encoder #1 is determined based on a historical input #1 of the encoder #1. Alternatively, the state information #1 of the encoder #1 may be initial state information of the encoder #1.

When receiving the CSI feedback information #1, the network device inputs the CSI feedback information #1 to the decoder #1. Alternatively, the CSI feedback information #1 is processed and then input to the decoder #1. The decoder #1 outputs, based on the CSI feedback information #1 and the state information #1 of the decoder #1, channel information corresponding to the CSI feedback information #1, namely, channel information corresponding to the reference signal #1. The state information #1 of the decoder #1 is determined based on a historical input #1 of the decoder #1. Alternatively, the state information #1 of the decoder #1 may be initial state information of the decoder #1.

For the related descriptions of the historical input #1 of the encoder #1 and the historical input #1 of the decoder, refer to the foregoing descriptions. Details are not described herein again.

When the network device does not successfully receive the CSI feedback information #1, the network device inputs, to the decoder, CSI feedback information received before the expected receiving moment of the CSI feedback information #1, for example, inputs the historical CSI feedback information #1 to the decoder #1. The decoder #1 outputs channel information corresponding to the CSI feedback information #1, namely, channel information corresponding to the reference signal #1.

For an example of the time-domain correlation-based CSI feedback procedure, refer to FIG. 5. Details are not described herein again.

The state information of the encoder may also be referred to as state information on a terminal device side. The state information of the decoder may also be referred to as state information on a network device side.

In the time-domain correlation-based CSI feedback scenario, the failure to report the CSI feedback information affects accuracy of the channel information obtained by the network device through decoding, that is, affects feedback performance. In addition, the accuracy of the channel information obtained by the network device through decoding continuously decreases as a quantity of packet loss times increases, that is, the feedback performance continuously deteriorates.

For example, the feedback performance may be evaluated based on a similarity or a difference between the channel information recovered on the network device side and the channel measurement result. For example, squared generalized cosine similarity (square generalized cosine similarity, SGCS) performance is a feedback performance indicator of the time-domain correlation-based CSI feedback procedure. That is, the feedback performance is evaluated by using an SGCS between the channel information recovered on the network device side and the channel measurement result.

FIG. 9 is a diagram of SGCS performance in different cases. As shown in FIG. 9, a horizontal coordinate is time t, and a vertical coordinate is an SGCS. When no packet loss occurs, the SGCS remains stable without loss. When CSI feedback information received last time is used after a packet loss occurs, the SGCS decreases, and the SGCS decreases after each packet loss. That is, each packet loss causes a performance loss.

In the solution in this embodiment of this application, a CSI feedback information resending mechanism is introduced. To be specific, a network device may indicate a terminal device to backhaul previously sent CSI feedback information. In a time-domain correlation-based CSI feedback scenario, this helps avoid a problem that feedback performance continuously deteriorates because CSI feedback information fails to be reported. For example, the CSI feedback information retransmitted by the terminal device may include the CSI feedback information that fails to be reported. In this way, a network device side may subsequently recover channel information based on the backhauled CSI feedback information that fails to be reported. This helps improve accuracy of the channel information. For example, a decoder may update state information of the decoder based on the backhauled CSI feedback information that fails to be reported, to better match state information of an encoder, that is, to implement alignment of state information on the two sides, thereby improving accuracy of recovered channel information to ensure feedback performance.

Optionally, when a quantity of reporting failure times of CSI feedback information reaches a threshold #1 (an example of a first threshold), the network device sends indication information #1 to the terminal device.

The network device counts a quantity cnt of packet loss times of CSI feedback information. When the quantity cnt of packet loss times of the CSI feedback information reaches the threshold #1, the network device indicates the terminal device to resend the CSI feedback information.

A start moment of the counting can be set based on a requirement.

For example, the network device may count a quantity of packet loss times of CSI feedback information after the terminal device performs access. For example, a counter #1 is started at an access moment of the terminal device, to count a quantity of packet loss times of CSI feedback information. When a value cnt of the counter #1 is equal to the threshold #1, step 720 is triggered.

For example, the method 700 may be repeatedly performed. A start moment of the counting may be a receiving moment of the one or more pieces of CSI feedback information. That is, after receiving the one or more pieces of CSI feedback information, the network device may recount the quantity of packet loss times of the CSI feedback information. For example, after the one or more pieces of CSI feedback information are received, the counter #1 is reset.

The foregoing is merely an example, and the start moment of the counting may alternatively be another moment. This is not limited in embodiments of this application.

In a possible implementation, when cnt=N, the network device may send the indication information #1, to indicate the terminal device to resend a part or all of the CSI feedback information that fails to be reported. N represents the threshold #1. A quantity of pieces of CSI feedback information that fails to be reported is N.

As described above, the indication information #1 may indicate K pieces of CSI feedback information, and the terminal device may select one or more pieces of CSI feedback information from the K pieces of CSI feedback information for reporting. For example, the K pieces of CSI feedback information may be a part or all of the N pieces of CSI feedback information that fail to be reported.

For example, the K pieces of CSI feedback information may be the N pieces of CSI feedback information that fail to be reported. In this case, K=N. That is, the indication information #1 indicates the N pieces of CSI feedback information that fail to be reported.

Alternatively, as described above, the indication information #1 may indicate one or more pieces of CSI feedback information. For example, the one or more pieces of CSI feedback information may be a part or all of the N pieces of CSI feedback information that fail to be reported.

In the solution in this embodiment of this application, a packet loss status may be monitored. After the quantity of pieces of CSI feedback information that fails to be reported reaches a specific threshold (namely, the threshold #1), the terminal device retransmits, to the network device, the part or all of the CSI feedback information that fails to be reported, to avoid continuous deterioration of feedback performance caused by frequent packet losses.

The following describes the threshold #1 by using examples.

For example, the threshold #1 may be predefined. Alternatively, the threshold #1 may be preconfigured.

For example, the threshold #1 may be determined based on a feature of a time-domain correlation-based two-side model.

The feature of the two-side model may include a tolerance interval of the two-side model, namely, a tolerance interval of a decoder #1.

For example, a reference signal may be periodically sent. The threshold #1 may be based on a ratio of the tolerance interval of the decoder #1 to a sending periodicity of the reference signal. For example, the threshold #1 may be a maximum integer less than or equal to the ratio of the tolerance interval of the decoder #1 to the sending periodicity of the reference signal.

Tolerance intervals of different two-side models may be different or may be the same.

For example, the tolerance interval of the two-side model may be predefined or preconfigured.

For example, a model library includes six different levels of two-side models. To be specific, the model library of the terminal device includes encoders of the six different levels of two-side models, and the model library of the network device includes decoders of the six different levels of two-side models. A level of an encoder used by the terminal device is the same as a level of a decoder used by the network device. The two-side model is a time correlation-based two-side model. CSI feedback periodicity intervals of two-side models corresponding to levels 1 to 6 are respectively 5 ms, 10 ms, 20 ms, 40 ms, and 80 ms.

Tolerance intervals of the two-side models corresponding to the levels 1 to 6 are respectively 20 ms, 30 ms, 40 ms, 80 ms, and 100 ms. Correspondingly, N is (20/5)/(30/10)/(40/20)/(80/40)/(100/80)=4/3/2/2/1.

As described above, in the time-domain correlation-based CSI feedback scenario, when CSI feedback information that currently needs to be received by the network device fails to be received, an input of the decoder #1 may be historical CSI feedback information (for example, CSI feedback information received last time). As shown in FIG. 9, recovering channel information by using the historical CSI feedback information causes performance deterioration. If the historical CSI feedback information is far away from a current moment, accuracy of recovered channel information may be severely affected, that is, performance is severely deteriorated.

The tolerance interval of the model is a maximum value of a difference between a receiving moment of historical CSI feedback information and a current moment, so that a performance deterioration degree is within an acceptable range. The current moment may be a moment at which channel information corresponding to CSI feedback information that fails to be reported is generated. Alternatively, the current moment may alternatively be an expected receiving moment of CSI feedback information that fails to be reported. For example, that a performance deterioration degree is within an acceptable range may be that the performance deterioration degree is less than or equal to a threshold #3. The maximum value of the difference corresponds to the threshold #3. For example, when the difference between the receiving moment of the historical CSI feedback information and the current moment is the maximum value, the performance deterioration degree caused by recovering the channel information by using the historical CSI feedback information may be equal to the threshold #3.

In other words, when current CSI feedback information fails to be received, the CSI feedback information received last time is used to recover the channel information. If the difference between the receiving moment of the CSI feedback information received last time and the current moment is less than or equal to the tolerance interval, the performance deterioration degree is less than or equal to the threshold #3, or is within the acceptable range. If the difference between the receiving moment of the CSI feedback information received last time and the current moment is beyond the tolerance interval, the performance deterioration degree is greater than the threshold #3, or exceeds the acceptable range.

If CSI feedback information #2 corresponding to a reference signal #2 is successfully reported, an input of the decoder #1 includes the CSI feedback information #2, and an output of the decoder #1 includes channel information corresponding to the reference signal #2. If CSI feedback information #3 corresponding to a reference signal #3 fails to be reported, an input of the decoder #1 includes the CSI feedback information #2, and an output of the decoder #1 includes channel information corresponding to the reference signal #3. A sending moment of the reference signal #2 is earlier than a sending moment of the reference signal #3. A tolerance interval of the decoder #1 is a maximum value of a difference between a moment at which the decoder #1 generates the channel information corresponding to the reference signal #3 and a receiving moment of the CSI feedback information #2. In a case in which the input includes the CSI feedback information #2 when the decoder #1 generates reference signal #3, a performance deterioration degree is less than or equal to the threshold #3. The maximum value of the difference corresponds to the threshold #3.

In the solution in this embodiment of this application, the threshold #1 may be determined based on the ratio of the tolerance interval of the decoder #1 to the sending periodicity of the reference signal. This helps avoid severe performance deterioration caused when the network device recovers channel information by using historical CSI feedback information that exceeds the tolerance interval. Specifically, when the quantity of packet loss times reaches the threshold #1, even if consecutive packet losses occur, the difference between the receiving moment of the historical CSI feedback information used by the decoder and the current moment is also within the tolerance interval. The terminal device is triggered to backhaul the CSI feedback information that fails to be reported, the network device side may recover the subsequent channel information based on the backhauled CSI feedback information that fails to be reported. This helps avoid severe performance deterioration caused when the network device recovers the channel information by using the historical CSI feedback information that exceeds the tolerance interval.

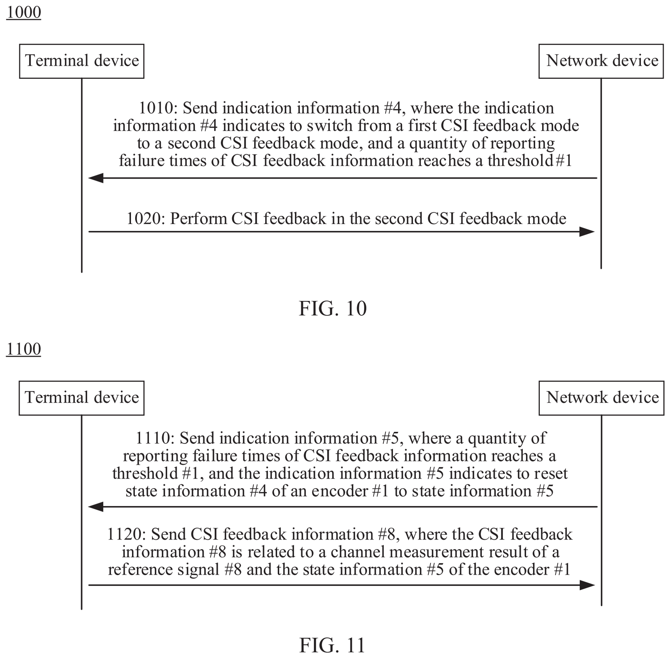

FIG. 10 shows another communication method according to an embodiment of this application. In the method 1000, a quantity of reporting failure times of CSI feedback information may be used as a basis for determining model update. When the quantity of reporting failure times of the CSI feedback information reaches a threshold #1, a network device side and a terminal device side switch from a current CSI feedback mode to another CSI feedback mode.

As shown in FIG. 10, the method 1000 may include the following steps.

1010: A terminal device receives indication information #4 (an example of third indication information) sent by a network device, where the indication information #4 indicates to switch from a first CSI feedback mode to a second CSI feedback mode, and the quantity of reporting failure times of the CSI feedback information reaches a threshold #1.

1020: The terminal device and the network device perform CSI feedback in the second CSI feedback mode.

For example, in step 1010, when the quantity of reporting failure times of the CSI feedback information reaches the threshold #1, the network device may send the indication information #4 to the terminal device.

The CSI feedback mode may indicate a manner of generating CSI feedback information, a manner of recovering channel information, and the like. The CSI feedback mode may further indicate other content, for example, a transmission manner of the CSI feedback information. This is not limited in embodiments of this application.

In a CSI feedback mode, the terminal device may perform channel measurement on a reference signal to obtain a channel measurement result, and process the channel measurement result in a manner of generating CSI feedback information under the CSI feedback mode, to generate the CSI feedback information corresponding to the reference signal. After receiving the feedback information, the network device may process the CSI feedback information in a manner of recovering channel information under the CSI feedback mode, to obtain the channel information corresponding to the reference signal.

The first CSI feedback mode and the second CSI feedback mode are different feedback modes.

The terminal device and the network device perform CSI feedback in the first CSI feedback mode. After a quantity of pieces of CSI feedback information that fails to be reported reaches a specific threshold, the network device may indicate the terminal device to switch to the second CSI feedback mode. In this way, the network device and the terminal device may perform CSI feedback in the second CSI feedback mode, to avoid performance deterioration caused by a packet loss of the CSI feedback information in the first CSI feedback mode, and help the network device obtain accurate channel information, thereby ensuring feedback performance to ensure user experience.

The method 1000 may be applied to a time-domain correlation based CSI feedback scenario. The first CSI feedback mode is a time-domain correlation-based CSI feedback mode.

For specific descriptions of the time-domain correlation-based CSI feedback scenario, refer to the foregoing descriptions. To avoid repetition, some descriptions are appropriately omitted when the method 1000 is described.

In the first CSI feedback mode, the network device may determine, based on CSI feedback information and historical CSI feedback information relative to the CSI feedback information, channel information corresponding to the CSI feedback information.

In other words, in the first CSI feedback mode, when determining channel information, the network device needs to determine the channel information based on currently received CSI feedback information and CSI feedback information received at a past moment.

In the first CSI feedback mode, the terminal device may determine, based on a channel measurement result of the reference signal and a channel measurement result of a historical reference signal relative to the reference signal, CSI feedback information corresponding to the reference signal.

In other words, in the first CSI feedback mode, the terminal device needs to generate CSI feedback information based on a currently measured channel measurement result and a channel measurement result at a historical moment.

Before step 1010, the method 1000 may further include step 1001 to step 1003.

1001: The network device sends a reference signal #4 (an example of a second reference signal) to the terminal device.

1002: The terminal device generates, in the first CSI feedback mode, CSI feedback information #4 (an example of second CSI feedback information) corresponding to the reference signal #4.

1003: The terminal device sends the CSI feedback information #4 to the network device.

In the first CSI feedback mode, the CSI feedback information #4 is an output of an encoder #1, or the CSI feedback information #4 is based on the output of the encoder #1. An input of the encoder #1 includes a channel measurement result of the reference signal #4. The output of the encoder #1 is related to the channel measurement result of the reference signal #4 and a historical input #2 of the encoder #1 (an example of a second historical input of the second AI model). The historical input #2 of the encoder #1 includes a channel measurement result of a historical reference signal #2 (an example of a second historical reference signal). A sending moment of the historical reference signal #2 is earlier than a sending moment of the reference signal #4.

For related descriptions of the reference signal #4 and the CSI feedback information #4, refer to the reference signal #1 and the CSI feedback information #1 in the time-domain correlation-based CSI feedback scenario in the foregoing method 700. To avoid repetition, details are not described herein again.

The method 1000 may further include step 1004.

1004: The network device determines, in the first CSI feedback mode based on the CSI feedback information #4, channel information corresponding to the reference signal #4.

In the first CSI feedback mode, if the CSI feedback information #4 is successfully received, an input of a decoder #1 includes the CSI feedback information #4 or is based on the CSI feedback information #4. An output of the decoder #1 includes the channel information corresponding to the reference signal #4. The output of the decoder #1 is related to the CSI feedback information #4 and a historical input #2 of the decoder #1. The historical input #2 of the decoder includes historical CSI feedback information #2, and a receiving moment of the historical CSI feedback information #2 is earlier than a receiving moment of the CSI feedback information #4. For related descriptions of the channel information corresponding to the reference signal #4, refer to the channel information corresponding to the reference signal #1 in the foregoing method 700. To avoid repetition, details are not described herein again.

Step 1004 is an optional step. For example, if the network device does not successfully receive the CSI feedback information #4, that is, the CSI feedback information #4 fails to be reported, step 1004 is not performed. The decoder #1 may recover the channel information by using other CSI feedback information. For specific descriptions, refer to the manner of recovering the channel information corresponding to the CSI feedback information #1 in the method 700. To avoid repetition, details are not described herein again.

For example, in the first CSI feedback mode, the encoder #1 may generate the CSI feedback information #4 based on the channel measurement result of the reference signal #4 and state information #2 of the encoder #1.

The state information #2 of the encoder #1 may be determined based on the channel measurement result of the historical reference signal #2.

The encoder #1 may further update the state information #2 of the encoder #1 based on the channel measurement result of the reference signal #4.

For example, in the first CSI feedback mode, the decoder #1 may determine, based on the CSI feedback information #4 and the state information #2 of the decoder #1, the channel information corresponding to the reference signal #4.

The state information #2 of the decoder #1 may be determined based on the historical CSI feedback information #2.

The decoder #1 may further update the state information #2 of the decoder #1 based on the CSI feedback information #4.

In the solution in this embodiment of this application, the first CSI feedback mode may be the time-domain correlation-based feedback mode. To be specific, historical data needs to be referred when the terminal device generates the CSI feedback information, and historical data needs to be referred when the network device recovers the channel information. After the quantity of pieces of CSI feedback information that fails to be reported reaches the specific threshold, the network device may indicate the terminal device to switch to the second CSI feedback mode, to avoid that accuracy of the channel information recovered by the network device decreases as a quantity of packet loss times increases, that is, help avoid continuous deterioration of feedback performance.

The threshold #1 may be predefined or preconfigured.

Alternatively, the threshold #1 may be based on a ratio of the tolerance interval of the decoder #1 to a sending periodicity of a reference signal.

For related descriptions of the threshold #1, refer to the foregoing method 700. To avoid repetition, details are not described herein again.

The following describes the indication information #4 by using examples.

In a possible implementation, the indication information #4 may be used to trigger switching of the feedback mode.

In other words, the indication information #4 may indicate to switch the feedback mode.

For example, the second CSI feedback mode may be predefined.

In another possible implementation, the indication information #4 may be used to determine the second feedback mode.

For example, the second CSI feedback mode may be determined by the network device, and the indication information #4 may indicate the second CSI feedback mode. The terminal device may switch from the first CSI feedback mode to the second CSI feedback mode based on the indication information #4.

For example, the indication information #4 may indicate an identity of the second CSI feedback mode. Identities of CSI feedback modes are set, where the identities of the CSI feedback modes are used to distinguish between the CSI feedback modes.

For another example, if the first CSI feedback mode and the second CSI feedback mode use different models, the indication information #4 may indicate an identity of the model used in the second CSI feedback mode.

The following uses Example 1 to Example 3 as examples to describe the second CSI feedback mode.

### Example 1

Both the second CSI feedback mode and the first CSI feedback mode are time-domain correlation-based CSI feedback modes. The first CSI feedback mode and the second CSI feedback mode use different time-domain correlation-based two-side models.

For example, the two-side models used in the first CSI feedback mode and the second CSI feedback mode may be models based on different structure parameters.

In this case, switching from the first CSI feedback mode to the second CSI feedback mode is switching from the current time-domain correlation-based two-side model to another time-domain correlation-based model.

The time-domain correlation-based two-side model used in the second CSI feedback mode may include an encoder #2 and a decoder #2. The encoder #2 and the decoder #2 are matched. The encoder #2 and the encoder #1 are different models. Correspondingly, the decoder #1 and the decoder #2 are different models. For specific descriptions of the encoder #2 and the decoder #2, refer to the encoder #1 and the decoder #1. To avoid repetition, details are not described herein again. For the terminal device side, the switching from the first CSI feedback mode to the second CSI feedback mode is switching from the current encoder #1 to the encoder #2. For the network device side, the switching from the first CSI feedback mode to the second CSI feedback mode is switching from the current decoder #1 to the decoder #2.

Further, a quantity of bits of CSI feedback information generated in the second CSI feedback mode is less than a quantity of bits of the CSI feedback information generated in the first CSI feedback mode.

In this case, switching from the first CSI feedback mode to the second CSI feedback mode is switching from the current time-domain correlation-based two-side model to a time-domain correlation-based two-side model with a smaller quantity of bits of CSI feedback information.

For example, step 1020 may include the following steps.

S1-1: The network device sends a reference signal #5 (an example of a third reference signal) to the terminal device.

S1-2: The terminal device generates, in the second CSI feedback mode, CSI feedback information #5 (an example of third CSI feedback information) corresponding to the reference signal #5.

S1-3: The terminal device sends the CSI feedback information #5 to the network device.

In the second CSI feedback mode, the CSI feedback information #5 is an output of the encoder #2 (an example of a third AI model), or the CSI feedback information #5 is based on the output of the encoder #2. An input of the encoder #2 includes a channel measurement result of the reference signal #5. The output of the encoder #2 is related to the channel measurement result of the reference signal #5 and a historical input #3 of the encoder #2 (an example of a third historical input of the third AI model). The historical input #3 of the encoder #2 includes a channel measurement result of a historical reference signal #3 (an example of a third historical reference signal). A sending moment of the historical reference signal #3 is earlier than a sending moment of the reference signal #5. A quantity of bits of the CSI feedback information #5 is less than a quantity of bits of the CSI feedback information #4. The CSI feedback information #4 is CSI feedback information generated in the first CSI feedback mode.

For related descriptions of the reference signal #5 and the CSI feedback information #5, refer to the reference signal #1 and the CSI feedback information #1 in the foregoing method 700. To avoid repetition, details are not described herein again.

Step 1020 may further include step S1-4.

S1-4: The network device determines, in the second CSI feedback mode based on the CSI feedback information #5, channel information corresponding to the reference signal #5.

In the second CSI feedback mode, if the CSI feedback information #5 is successfully received, an input of the decoder #2 includes the CSI feedback information #5 or is based on the CSI feedback information #5. An output of the decoder #2 includes the channel information corresponding to the reference signal #5. The output of the decoder #2 is related to the CSI feedback information #5 and a historical input #3 of the decoder #2. The historical input #3 of the decoder #2 includes historical CSI feedback information #3, and a receiving moment of the historical CSI feedback information #3 is earlier than a receiving moment of the CSI feedback information #5. For related descriptions of the channel information corresponding to the reference signal #5, refer to the channel information corresponding to the reference signal #1 in the foregoing method 700. To avoid repetition, details are not described herein again.

Step S1-4 is an optional step. For example, if the network device fails to receive the CSI feedback information #5, step S1-4 is not performed. The decoder #2 may recover the channel information by using other CSI feedback information. For specific descriptions, refer to the manner of recovering the channel information corresponding to the CSI feedback information #1 in the method 700. To avoid repetition, details are not described herein again.

For example, in the second CSI feedback mode, the encoder #2 may generate the CSI feedback information #5 based on the channel measurement result of the reference signal #5 and state information #3 of the encoder #2.

The state information #3 of the encoder #2 may be determined based on the channel measurement result of the historical reference signal #3.

The encoder #2 may further update the state information #3 of the encoder #2 based on the channel measurement result of the reference signal #5.

For example, in the second CSI feedback mode, the decoder #2 may determine, based on the CSI feedback information #5 and state information #3 of the decoder #2, the channel information corresponding to the reference signal #5.

The state information #3 of the decoder #2 may be determined based on the historical CSI feedback information #3.

The decoder #2 may further update the state information #3 of the decoder #2 based on the CSI feedback information #5.

For a specific feedback procedure in the second CSI feedback mode, refer to the related descriptions of the first CSI feedback mode. To avoid repetition, details are not described herein again.

A quantity of bits of the CSI feedback information generated by the model (the encoder #2) used in the second CSI feedback mode is less than a quantity of bits of the CSI feedback information generated by the model (the encoder #1) used in the first CSI feedback mode.

Table 1 shows a correspondence between a quantity of bits of feedback information and a model.

**Table 1**

| Quantity of bits (bits) of CSI feedback information | Identity (identity, ID) of an AI model |
|---|---|
| 60 bits | 1 |
| 120 bits | 2 |
| 180 bits | 3 |
| 240 bits | 4 |

For example, the indication information #4 may indicate an identity of a model using a smaller quantity of feedback bits.

For example, an ID of the AI model (the encoder #1) in the current terminal device is 4, and an identity indicated by the indication information #4 is 1. The terminal device switches from the AI model using the ID of 4 to the AI model (the encoder #2) using the ID of 1.

It should be understood that content shown in Table 1 is merely an example, and constitutes no limitation on the solutions in embodiments of this application.

In the solution in this embodiment of this application, the second CSI feedback mode still uses a time-domain correlation-based feedback mode. In this way, a time-domain correlation can still be used to improve accuracy of recovering the channel information, to improve feedback performance. In addition, the feedback mode is switched to the model using a smaller quantity of feedback bits, that is, a quantity of bits of CSI feedback information is reduced, thereby reducing a requirement on a channel transmission condition for sending uplink feedback information, that is, helping a time-domain correlation-based CSI feedback process adapt to the current channel transmission condition. This helps reduce a packet loss of the uplink feedback information, to help ensure user experience.

Optionally, the method 1000 may further include: The network device sends indication information #3 to the terminal device, where the indication information #3 indicates to increase uplink transmit power.

In the solution in this embodiment of this application, the network device indicates to adjust the uplink transmit power, to improve a channel transmission condition. This helps ensure successful transmission of the CSI feedback information after the CSI feedback mode is switched.

For specific descriptions of the indication information #3, refer to the related descriptions in the method 700. To avoid repetition, details are not described herein again.

For example, the network device may further indicate the terminal device to increase an uplink resource, to transmit the CSI feedback information generated in the second CSI feedback mode. That is, a resource quantity for an uplink resource used to transmit the CSI feedback information #5 is greater than a resource quantity for an uplink resource used to transmit the CSI feedback information #4.

In the solution in this embodiment of this application, the network device indicates to increase the uplink resource, to improve a channel transmission condition. This helps ensure successful transmission of the CSI feedback information after the CSI feedback mode is switched.

### Example 2

A time-domain correlation-based two-side model is used in the first CSI feedback mode. A non-time-domain correlation-based two-side model is used in the second CSI feedback mode.

In this case, switching from the first CSI feedback mode to the second CSI feedback mode is switching from the time-domain correlation-based two-side model to the non-time-domain correlation-based two-side model.

The non-time-domain correlation-based two-side model may include an encoder #3 and a decoder #3. The encoder #3 and the decoder #3 are matched. For the terminal device side, the switching from the first CSI feedback mode to the second CSI feedback mode is switching from the current encoder #1 to the encoder #3. For the network device side, the switching from the first CSI feedback mode to the second CSI feedback mode is switching from the current decoder #1 to the decoder #3.

The non-time-domain correlation-based model is a model whose output result does not depend on a historical input.

As described above, for the time-domain correlation-based two-side model, the CSI feedback information is related to the currently measured channel measurement result and the channel measurement result at the historical moment, and the recovered channel information is related to the currently received CSI feedback information and the CSI feedback information received at the past moment.

For the non-time-domain correlation-based two-side model, the CSI feedback information is related to the currently measured channel measurement result, and is unrelated to the channel measurement result at the historical moment. The recovered channel information is related to the currently received CSI feedback information, and is unrelated to the CSI feedback information received at the past moment.

For example, step 1020 may include the following steps.

S2-1: The network device sends a reference signal #6 (an example of a fourth reference signal) to the terminal device.

S2-2: The terminal device generates, in the second CSI feedback mode, CSI feedback information #6 (an example of fourth CSI feedback information) corresponding to the reference signal #6.

S2-3: The terminal device sends the CSI feedback information #6 to the network device.

In the second CSI feedback mode, a channel measurement result of the reference signal #6 is input to the encoder #3 (an example of a fourth AI model). The encoder #3 outputs the CSI feedback information #6. Alternatively, an output of the encoder #3 is processed to obtain the CSI feedback information #6. For example, an output of the encoder #3 is quantized, to obtain the CSI feedback information #6.

In other words, the CSI feedback information #6 is the output of the encoder #3 or is based on the output of the encoder #3. An input of the encoder #3 includes a channel measurement result of the reference signal #6. The output of the encoder #3 is related to the channel measurement result of the reference signal #6, and is unrelated to a historical input of the encoder #3. That is, the CSI feedback information #6 is unrelated to a channel measurement result of a previously received historical reference signal.

Step 1020 may further include step S2-4.

S2-4: The network device determines, in the second CSI feedback mode based on the CSI feedback information #6, channel information corresponding to the reference signal #6.

In the second CSI feedback mode, if the CSI feedback information #6 is successfully received, the CSI feedback information #6 is input to the decoder #3, or the CSI feedback information #6 is processed and then input to the decoder #3. For example, the CSI feedback information #6 may be obtained by quantizing the output of the encoder #3, and the CSI feedback information #6 is dequantized and then input to the decoder #3. The decoder #3 recovers the channel information corresponding to the reference signal #6.

In other words, an input of the decoder #3 includes the CSI feedback information #6 or is based on the CSI feedback information #6. An output of the decoder #3 includes the channel information corresponding to the reference signal #6. The output of the decoder #3 is related to the CSI feedback information #6, and is unrelated to the historical input of the decoder #3. That is, the channel information corresponding to the reference signal #6 is unrelated to previously received historical CSI feedback information.

In the solution in this embodiment of this application, in the second CSI feedback mode, the CSI feedback information is generated and the channel information is recovered by using the non-time-domain correlation-based model, and determining of the channel information is unrelated to the historical data. This helps ensure feedback performance to ensure user experience. Specifically, even if a packet loss occurs in the second CSI feedback mode, accuracy of the subsequently recovered channel information is not affected, to avoid that accuracy of the channel information recovered by the network device continues to decrease as a quantity of packet loss times increases. This helps ensure feedback performance to ensure user experience.

Optionally, the method 1000 may further include: The network device sends indication information #3 to the terminal device, where the indication information #3 indicates to increase uplink transmit power.

In the solution in this embodiment of this application, the network device indicates to adjust the uplink transmit power, to improve a channel transmission condition. This helps ensure successful transmission of the CSI feedback information after the CSI feedback mode is switched.

For specific descriptions of the indication information #3, refer to the related descriptions in the method 700. To avoid repetition, details are not described herein again.

For example, the network device may further indicate the terminal device to increase an uplink resource, to transmit the CSI feedback information generated in the second CSI feedback mode. That is, a resource quantity for an uplink resource used to transmit the CSI feedback information #6 is greater than a resource quantity for an uplink resource used to transmit the CSI feedback information #4.

In the solution in this embodiment of this application, the network device indicates to increase the uplink resource, to improve a channel transmission condition. This helps ensure successful transmission of the CSI feedback information after the CSI feedback mode is switched.

### Example 3

The first CSI feedback mode may be a time-domain correlation-based CSI feedback mode.

The second CSI feedback mode may be a conventional CSI feedback mode, for example, a feedback mode based on a predefined codebook.

The predefined codebook may be understood as a non-AI model.

For example, the predefined codebook may be a codebook in a 3GPP protocol. For example, the codebook may be any one of the following: a 3GPP protocol release (release, R) 15 type (type) I codebook, a 3GPP protocol R15 type II codebook, a 3GPP protocol R16 enhanced type (enhanced type, etype) II codebook, a 3GPP protocol R17 codebook, a 3GPP protocol R18 codebook, or the like. For example, step 1020 may include the following steps.

S3-1: The network device sends a reference signal #7 (an example of a fifth reference signal) to the terminal device.

S3-2: The terminal device generates, in the second CSI feedback mode, CSI feedback information #7 (an example of fifth CSI feedback information) corresponding to the reference signal #7.

S3-3: The terminal device sends the CSI feedback information #7 to the network device.

S3-4: The network device determines, in the second CSI feedback mode based on the CSI feedback information #7, channel information corresponding to the reference signal #7.

In the second CSI feedback mode, the terminal device may compress and/or quantize a channel measurement result of the reference signal #7 based on the codebook, to generate the CSI feedback information #7. The network device may process the CSI feedback information #7 based on the predefined codebook, to recover the channel information corresponding to the reference signal #7.

In the solution in this embodiment of this application, in the second CSI feedback mode, CSI feedback is performed in the conventional feedback mode, for example, the feedback mode based on the predefined codebook, and determining of the channel information is unrelated to the historical data. This helps ensure feedback performance to ensure user experience. Specifically, even if a packet loss occurs in the second CSI feedback mode, accuracy of the subsequently recovered channel information is not affected, to avoid that accuracy of the channel information recovered by the network device continues to decrease as a quantity of packet loss times increases. This helps ensure feedback performance to ensure user experience.

Optionally, the method 1000 may further include: The network device sends indication information #3 to the terminal device, where the indication information #3 indicates to increase uplink transmit power.

For specific descriptions of the indication information #3, refer to the related descriptions in the method 700. To avoid repetition, details are not described herein again.

For example, the network device may further indicate the terminal device to increase an uplink resource, to transmit the CSI feedback information generated in the second CSI feedback mode. That is, a resource quantity for an uplink resource used to transmit the CSI feedback information #7 is greater than a resource quantity for an uplink resource used to transmit the CSI feedback information #4.

In the solution in this embodiment of this application, the network device indicates to adjust the uplink transmit power or increase the uplink resource, to improve a channel transmission condition. This helps ensure successful transmission of the CSI feedback information after the CSI feedback mode is switched. When CSI feedback is performed in the conventional CSI feedback mode, a quantity of bits of CSI feedback information is usually greater than a quantity of bits of CSI feedback information generated in an AI-based feedback feedback mode. In the solution in this embodiment of this application, improving the channel transmission condition helps transmit feedback information of a larger quantity of bits, to avoid excessive compression and/or quantization of the channel information, and help ensure quality of the channel information recovered by the network device in the conventional feedback mode.

FIG. 11 shows still another communication method according to an embodiment of this application. The method 1100 shown in FIG. 11 may be applied to a time-domain correlation-based CSI feedback procedure. The CSI feedback procedure may be implemented by using a time-domain correlation-based two-side model. The two-side model may include an encoder #1 and a decoder #1. For related descriptions of the time-domain correlation-based feedback procedure, refer to the foregoing descriptions. To avoid repetition, some descriptions are appropriately omitted when the method 1100 is described. In the method 1100, a quantity of reporting failure times of CSI feedback information may be used as a basis for determining model state update. When the quantity of reporting failure times of the CSI feedback information reaches a threshold #1, a status of the entire model is reset.

As shown in FIG. 11, the method 1100 may include the following steps.

1110: A terminal device receives indication information #5 (an example of fourth indication information) sent by a network device, where a quantity of reporting failure times of CSI feedback information reaches the threshold #1.

The indication information #5 indicates to reset state information of the encoder #1.

Specifically, the indication information #5 indicates to reset state information #4 (an example of first state information) of the encoder #1 to state information #5 (an example of second state information) of the encoder #1. The state information #5 of the encoder #1 occurs before CSI feedback information fails to be reported.

The state information #4 of the encoder #1 is determined based on a historical input #4 (an example of a fourth historical input of a second AI model) of the encoder #1. The historical input #4 of the encoder #1 includes a channel measurement result of a historical reference signal #4 (an example of a fourth historical reference signal).

The state information #5 of the encoder #1 is initial state information of the encoder #1. Alternatively, the state information #5 of the encoder #1 is determined based on a historical input #5 (an example of a fifth historical input of the second AI model) of the encoder #1. The historical input #5 of the encoder #1 includes a channel measurement result of a historical reference signal #5 (an example of a fifth historical reference signal).

A sending moment of the historical reference signal #5 is earlier than a sending moment of the historical reference signal #4. That is, the state information #5 is state information before the state information #4.

For example, a sending moment of the historical reference signal #5 occurs before the CSI feedback information fails to be reported.

For example, the state information #4 of the encoder #1 may be understood as current state information of the encoder #1. The state information #5 of the encoder #1 is state information before the CSI feedback information fails to be reported.

In other words, when the quantity of reporting failure times of the CSI feedback information reaches the threshold #1, the network device indicates to reset the state information of the encoder #1, that is, reset the state information of the encoder #1 to the state information before the CSI reporting failure occurs. Correspondingly, the decoder #1 is also reset to state information before the CSI reporting failure occurs. The reset state information of the decoder #1 matches the reset state information of the encoder #1. FIG. 6 is used as an example. The current state information of the encoder #1 (namely, the state information #4 of the encoder #1) is e₅, and state information of the decoder #1 is d₅. For example, the reset state information of the encoder #1 (namely, the state information #5 of the encoder #1) may be e₁, and the reset state information of the decoder #1 may be d₁. For another example, the state information of the reset encoder #1 may be e₂, and the state information of the reset decoder #1 may be d₂. For another example, the state information of the reset encoder #1 may be e₀, and the state information of the reset decoder #1 may be d₀.

1120: The terminal device sends CSI feedback information #8 (an example of sixth CSI feedback information) to the network device. The CSI feedback information #8 is related to a channel measurement result of a reference signal #8 (an example of a sixth reference signal) and the state information #5 of the encoder #1.

The network device sends the reference signal #8 to the terminal device. The state information of the encoder #1 has been reset to the state information #5. The channel measurement result of the reference signal #8 is input to the encoder #1. The CSI feedback information #8 is generated based on an output of the encoder #1. The output of the encoder #1 is related to the state information #5 of the encoder #1 and the channel measurement result of the reference signal #8.

The CSI feedback information #8 may be the output of the encoder #1. That is, the encoder #1 may output the CSI feedback information #8 based on the state information #5 of the encoder #1 and the channel measurement result of the reference signal #8.

Alternatively, the CSI feedback information #8 may be determined based on an output of the encoder #1. For example, the output of the encoder #1 is quantized, to obtain the CSI feedback information #8.

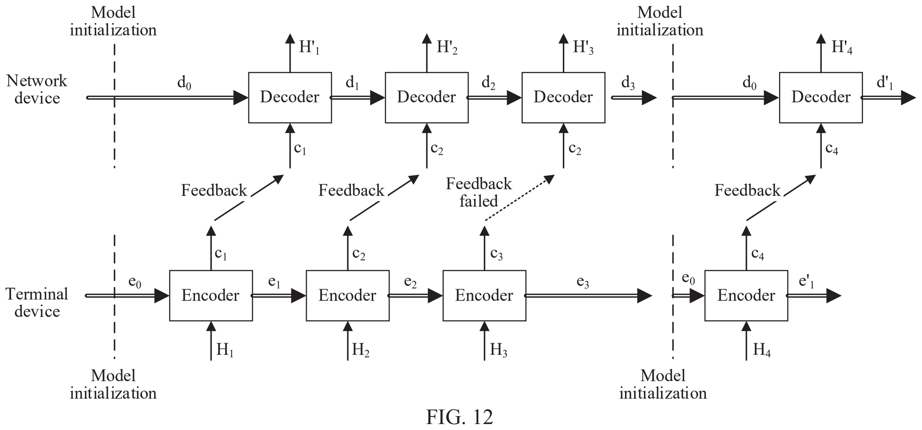

The following describes the method 1100 by using an example with reference to FIG. 12.

As shown in FIG. 12, the terminal device inputs a channel measurement result H₃ to the encoder. The encoder outputs CSI feedback information c₃ based on the channel measurement result H₃ and state information e₂, and updates the state information e₂ to obtain state information e₃. The state information e₃ may be used in a next CSI feedback procedure. When the CSI feedback information c₃ fails to be reported, the network device inputs, to the decoder, CSI feedback information c₂ received last time. The decoder outputs CSI recovery information H'₃ based on the CSI feedback information c₂ and the state information d₂, and obtains state information d₃.

For example, the threshold #1 may be 1. That is, when one CSI reporting failure occurs, the network device indicates to reset state information of the model. The current state information of the encoder (namely, an example of the state information #4 of the encoder #1) is e₃. The network device sends the indication information #5, to indicate to reset the state information of the encoder to e₀ (namely, an example of the state information #5 of the encoder #1). Correspondingly, the state information of the decoder is also reset to d₀.

The network device sends a reference signal R₄ (namely, an example of the reference signal #8) to the terminal device. The terminal device measures the reference signal R₄, to obtain a channel measurement result H₄. The channel measurement result H₄ is input to the encoder. The encoder outputs CSI feedback information c₄ (namely, an example of the CSI feedback information #8) based on the channel measurement result H₄ and the state information e₀, and updates the state information e₀ to obtain state information ei'. The state information e₁' may be used in a next CSI feedback procedure. The terminal device sends the CSI feedback information c₄ to the network device. The network device inputs the CSI feedback information c₄ to the decoder. The decoder outputs CSI recovery information H'₄ based on the CSI feedback information c₄ and the state information d₀, and updates the state information d₀ to obtain state information d₁'. The state information d₁' may be used in a next CSI feedback procedure.

The threshold #1 may be predefined or preconfigured.

Alternatively, the threshold #1 may be based on a ratio of the tolerance interval of the decoder #1 to a sending periodicity of a reference signal.

For related descriptions of the threshold #1, refer to the foregoing method 700. To avoid repetition, details are not described herein again.

In the solution in this embodiment of this application, after the quantity of pieces of CSI feedback information that fails to be reported reaches a specific threshold, the network device may indicate to reset the state information of the model used to generate the CSI feedback information, and to reset the state information of the model before a packet loss of the CSI feedback information occurs, to recover consistency between the state information of the model on the network device and the state information of the model on the terminal device. This helps improve accuracy of channel information recovered by the network device, to improve feedback performance, and help ensure user experience.

Optionally, the method 1000 may further include: The network device sends indication information #3 to the terminal device, where the indication information #3 indicates to increase uplink transmit power.

For specific descriptions of the indication information #3, refer to the related descriptions in the method 700. To avoid repetition, details are not described herein again.

For example, the network device may further indicate the terminal device to increase an uplink resource, to transmit the CSI feedback information generated in the second CSI feedback mode. That is, a resource quantity for an uplink resource used to transmit the CSI feedback information #8 is greater than a resource quantity for an uplink resource used to transmit the CSI feedback information before the resetting.

In the solution in this embodiment of this application, the network device indicates to adjust the uplink transmit power or increase the uplink resource, to improve a channel transmission condition. This helps ensure successful transmission of the CSI feedback information.

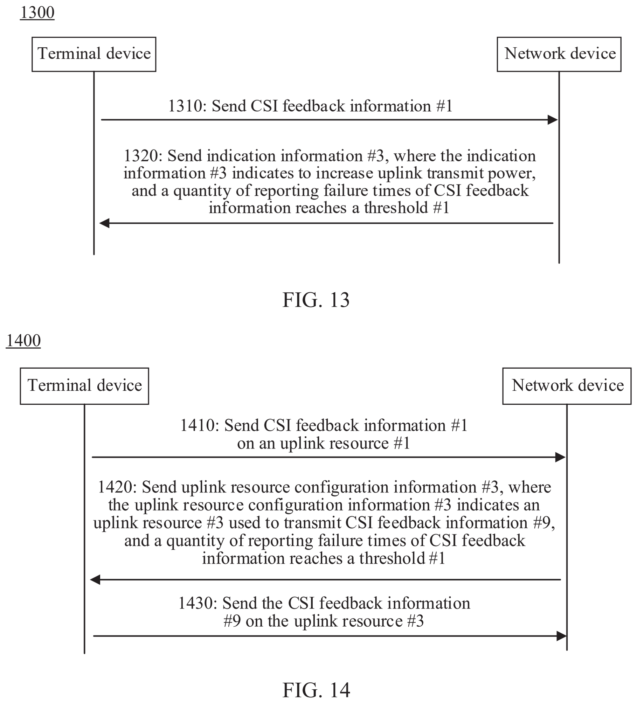

FIG. 13 is a diagram of still another communication method according to an embodiment of this application. The method 1300 shown in FIG. 13 may be applied to a time-domain correlation-based CSI feedback procedure. The CSI feedback procedure may be implemented by using a time-domain correlation-based two-side model. The two-side model may include an encoder #1 and a decoder #1. For related descriptions of the time-domain correlation-based feedback procedure, refer to the foregoing descriptions. To avoid repetition, some descriptions are appropriately omitted when the method 1300 is described.

As shown in FIG. 13, the method 1300 includes the following steps.

1310: A terminal device sends CSI feedback information #1 to a network device.

The CSI feedback information #1 is an output of the encoder #1 or is based on the output of the encoder #1. The output of the encoder #1 is related to a channel measurement result of a reference signal #1 and a historical input #1 of the encoder #1. The historical input #1 of the encoder #1 includes a channel measurement result of a historical reference signal #1. A receiving moment of the historical reference signal #1 is earlier than a receiving moment of the reference signal #1.

1320: The network device sends indication information #3 to the terminal device. The indication information #3 indicates to increase uplink transmit power. A quantity of reporting failure times of CSI feedback information reaches a threshold #1.

The network device counts a quantity cnt of packet loss times of CSI feedback information. When the quantity cnt of packet loss times of the CSI feedback information reaches the threshold #1, the network device indicates to increase the uplink transmit power.

For related descriptions of the threshold #1, refer to the foregoing descriptions. Details are not described herein again.

In the solution in this embodiment of this application, the network device monitors a packet loss status. When a quantity of pieces of CSI feedback information that fails to be reported reaches a specific threshold, the network device may indicate the terminal device to increase the uplink transmit power, to improve a channel transmission condition. This helps ensure successful transmission of the CSI feedback information, to avoid continuous deterioration of feedback performance caused by a continuous packet loss of subsequent CSI feedback information.

FIG. 14 is a diagram of still another communication method according to an embodiment of this application. The method 1400 shown in FIG. 14 may be applied to a time-domain correlation-based CSI feedback procedure. The CSI feedback procedure may be implemented by using a time-domain correlation-based two-side model. The two-side model may include an encoder #1 and a decoder #1. For related descriptions of the time-domain correlation-based feedback procedure, refer to the foregoing descriptions. To avoid repetition, some descriptions are appropriately omitted when the method 1400 is described.

As shown in FIG. 14, the method 1400 includes the following steps.

1410: A terminal device sends CSI feedback information #1 to a network device on an uplink resource #1.

The method 1400 may further include: The network device sends uplink resource configuration information #1 to the terminal device, where the uplink resource configuration information #1 indicates the uplink resource #1 used to transmit the CSI feedback information #1.

The CSI feedback information #1 is an output of the encoder #1 or is based on the output of the encoder #1. The output of the encoder #1 is related to a channel measurement result of a reference signal #1 and a historical input #1 of the encoder #1. The historical input #1 of the encoder #1 includes a channel measurement result of a historical reference signal #1. A receiving moment of the historical reference signal #1 is earlier than a receiving moment of the reference signal #1.

For related descriptions of step 1410, refer to the method 700. To avoid repetition, details are not described herein again.

1420: The network device sends uplink resource configuration information #3 to the terminal device, where the uplink resource configuration information #3 indicates an uplink resource #3 used to transmit CSI feedback information #9. A resource quantity for the uplink resources #3 is greater than a resource quantity for the uplink resource #1. A quantity of reporting failure times of CSI feedback information reaches a threshold #1.

The network device counts a quantity cnt of packet loss times of CSI feedback information. When the quantity cnt of packet loss times of the CSI feedback information reaches the threshold #1, the network device indicates to increase the uplink resource to send the CSI feedback information.

For example, the network device may preferentially increase a CCE resource of the terminal device.

For related descriptions of the threshold #1, refer to the foregoing descriptions. Details are not described herein again.

For example, the CSI feedback information #9 may be one of the one or more pieces of CSI feedback information in the method 700. In this case, the uplink resource configuration information #3 is the foregoing uplink resource configuration information #2.

For example, the CSI feedback information #9 may be CSI feedback information reported after the second CSI feedback mode is switched to in the method 1000, for example, the CSI feedback information #5, the CSI feedback information #6, or the CSI feedback information #7.

For example, the CSI feedback information #9 may be CSI feedback information reported after the model is reset in the method 1100, for example, the CSI feedback information #8.

For example, the CSI feedback information #9 may alternatively be CSI feedback information generated when CSI feedback continues to be performed in an original CSI feedback mode.

1430: The terminal device sends the CSI feedback information #9 to the network device on the uplink resource #3.

In the solution in this embodiment of this application, the network device monitors a packet loss status. When a quantity of pieces of CSI feedback information that fails to be reported reaches a specific threshold, the network device may adjust a configuration of a time-frequency domain resource to increase the uplink resource, to improve a channel transmission condition. This helps ensure successful transmission of the CSI feedback information, to avoid continuous deterioration of feedback performance caused by a continuous packet loss of subsequent CSI feedback information.

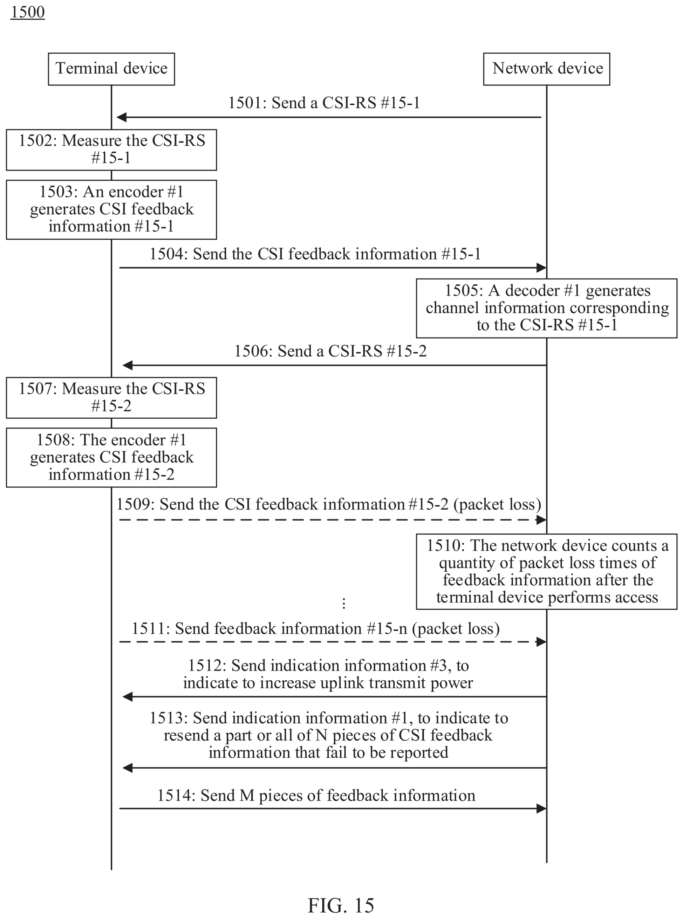

FIG. 15 is a diagram of still another communication method according to an embodiment of this application. The method 1500 shown in FIG. 15 may be considered as an example of the method 700 shown in FIG. 7. For related descriptions, refer to the method 700. To avoid repetition, some content is appropriately omitted when the method 1500 is described. The method 1500 may be applied to a time correlation based CSI feedback scenario. Specifically, in the method 1500, time-correlation-based CSI feedback is implemented by using a time-correlation-based two-side model. The two-side model includes an encoder #1 and a decoder #1.

As shown in FIG. 15, the method 1500 includes the following steps.

1501: A network device sends a CSI-RS #15-1 to a terminal device.

In the method 1500, an example in which a reference signal is a CSI-RS is used for description, and constitutes no limitation on the solutions in embodiments of this application. The reference signal may alternatively be another signal. For specific descriptions, refer to the method 700.

1502: The terminal device measures the CSI-RS #15-1.

The terminal device performs channel measurement on the CSI-RS #15-1, to obtain a channel measurement result of the CSI-RS #15-1.

1503: The encoder #1 generates CSI feedback information #15-1.

The encoder #1 generates the CSI feedback information #15-1 based on the channel measurement result of the CSI-RS #15-1 and current state information of the encoder #1. For a specific manner of generating the CSI feedback information, refer to the CSI feedback information #1 in the foregoing method 700. Details are not described herein again.

1504: The terminal device sends the CSI feedback information #15-1 to the network device.

1505: The decoder #1 generates channel information corresponding to the CSI-RS #15-1.

The decoder #1 generates, based on the CSI feedback information #15-1 and current state information of the decoder #1, the channel information corresponding to the CSI-RS #15-1. For a specific manner of recovering the channel information, refer to the foregoing method 700. Details are not described herein again.

1506: The network device sends a CSI-RS #15-2 to the terminal device.

1507: The terminal device measures the CSI-RS #15-2.

The terminal device performs channel measurement on the CSI-RS #15-2, to obtain a channel measurement result of the CSI-RS #15-2.

1508: The encoder #1 generates CSI feedback information #15-2.

The encoder #1 generates the CSI feedback information #15-2 based on the channel measurement result of the CSI-RS #15-2 and current state information of the encoder #1. For a specific manner of generating the CSI feedback information, refer to the foregoing method 700. Details are not described herein again.

1509: The terminal device sends the CSI feedback information #15-2 to the network device. As shown in FIG. 15, a packet loss of the CSI feedback information #15-2 occurs.

For example, an uplink channel condition of the terminal device deteriorates, and the CSI feedback information fails to be reported.

1510: The network device counts a quantity of packet loss times of feedback information after the terminal device performs access.

The CSI feedback continues to be performed between the network device and the terminal device. For a feedback process, refer to step 1501 to step 1509.

1511: The terminal device sends feedback information #15-n to the network device. n is a positive integer.

As shown in FIG. 15, a packet loss of the feedback information #15-n occurs.

1512: When the quantity of packet loss times of the CSI feedback information is equal to N, send indication information #3 to the terminal device through triggering, to indicate to increase uplink transmit power of the terminal device.

For a manner of determining N, refer to the method 700.

1513: Send indication information #1 to the terminal device, to indicate to resend a part or all of the N pieces of CSI feedback information that fail to be reported.

For example, the indication information #1 indicates the terminal device to send M pieces of feedback information in the N pieces of feedback information. M is a positive integer less than or equal to N.

It should be understood that the indication information #1 herein is merely an example, and the indication information #1 may further indicate other content. For specific descriptions, refer to the method 700.

1514: The terminal device sends the M pieces of CSI feedback information to the network device.

The M pieces of CSI feedback information are the one or more pieces of CSI feedback information in the method 700.

For example, the M pieces of feedback information may be M pieces of latest lost feedback information. For another example, the M pieces of feedback information may be M pieces of randomly selected feedback information.

In the solution in this embodiment of this application, a CSI feedback information resending mechanism is introduced. To be specific, the network device may indicate the terminal device to backhaul the CSI feedback information that fails to be reported before. In this way, the decoder may update the state information of the decoder based on the backhauled CSI feedback information that fails to be reported, to better match the state information of the encoder, thereby improving accuracy of the recovered channel information to ensure feedback performance. As shown in FIG. 9, a manner of retransmitting the CSI feedback information indicating the lost packet can improve SGCS performance, that is, help ensure feedback performance.

In addition, the network device may indicate the terminal device to increase the uplink transmit power, to improve a channel transmission condition. This helps ensure that the terminal device can successfully backhaul the M pieces of CSI feedback information.

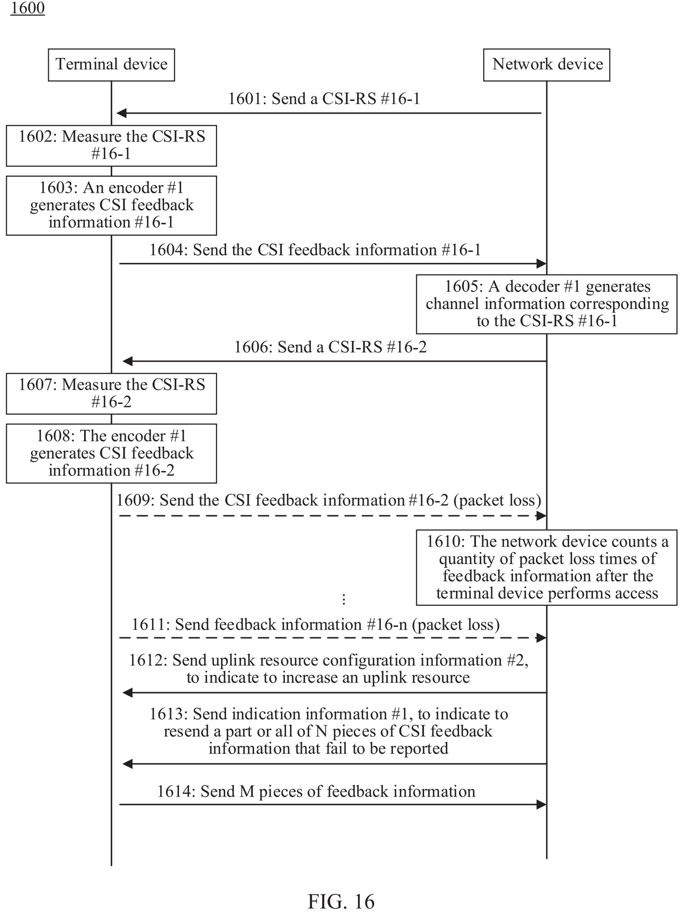

FIG. 16 is a diagram of still another communication method according to an embodiment of this application. The method 1600 shown in FIG. 16 may be considered as an example of the method 700 shown in FIG. 7. For related descriptions, refer to the method 700. To avoid repetition, some content is appropriately omitted when the method 1600 is described. The method 1600 may be applied to a time correlation based CSI feedback scenario. Specifically, in the method 1600, time-correlation-based CSI feedback is implemented by using a time-correlation-based two-side model. The two-side model includes an encoder #1 and a decoder #1.

A main difference between the method 1600 and the method 1500 lies in that, in the method 1500, the network device indicates to increase the uplink transmit power of the terminal device, while in the method 1600, the network device indicates to increase an uplink resource used to retransmit CSI feedback information. In the method 1600, for a part similar to that in the method 1500, refer to the descriptions of the method 1500. To avoid repetition, some content is appropriately omitted when the method 1600 is described.

As shown in FIG. 16, the method 1600 includes the following steps.

1601: A network device sends a CSI-RS #16-1 to a terminal device.

1602: The terminal device measures the CSI-RS #16-1.

1603: The encoder #1 generates CSI feedback information #16-1.

1604: The terminal device sends the CSI feedback information #16-1 to the network device.

1605: The decoder #1 generates channel information corresponding to the CSI-RS #16-1.

1606: A network device sends a CSI-RS #16-2 to a terminal device.

1607: The terminal device measures the CSI-RS #16-2.

1608: The encoder #1 generates CSI feedback information #16-2.

1609: The terminal device sends the CSI feedback information #16-2 to the network device.

As shown in FIG. 16, a packet loss of the CSI feedback information #16-2 occurs.

1610: The network device counts a quantity of packet loss times of feedback information after the terminal device performs access.

The CSI feedback continues to be performed between the network device and the terminal device. For a feedback process, refer to step 1601 to step 1609.

1611: The terminal device sends feedback information #16-n to the network device.

As shown in FIG. 16, a packet loss of the feedback information #16-n occurs.

1612: When the quantity of packet loss times of the CSI feedback information is equal to N, send uplink resource configuration information #2 to the terminal device through triggering, to indicate to increase the uplink resource.

For a manner of determining N, refer to the method 700.

1613: Send indication information #1 to the terminal device, to indicate to resend a part or all of the N pieces of CSI feedback information that fail to be reported.

1614: The terminal device sends M pieces of feedback information to the network device.

In the solution in this embodiment of this application, a CSI feedback information resending mechanism is introduced. To be specific, the network device may indicate the terminal device to backhaul the CSI feedback information that fails to be reported before. In this way, the decoder may update state information of the decoder based on the backhauled CSI feedback information that fails to be reported, to better match state information of the encoder, thereby improving accuracy of recovered channel information to ensure feedback performance.

In addition, the network device may indicate the terminal device to increase the uplink resource used to transmit the CSI feedback information, to improve a channel transmission condition. This helps ensure that the terminal device can successfully backhaul the M pieces of CSI feedback information.

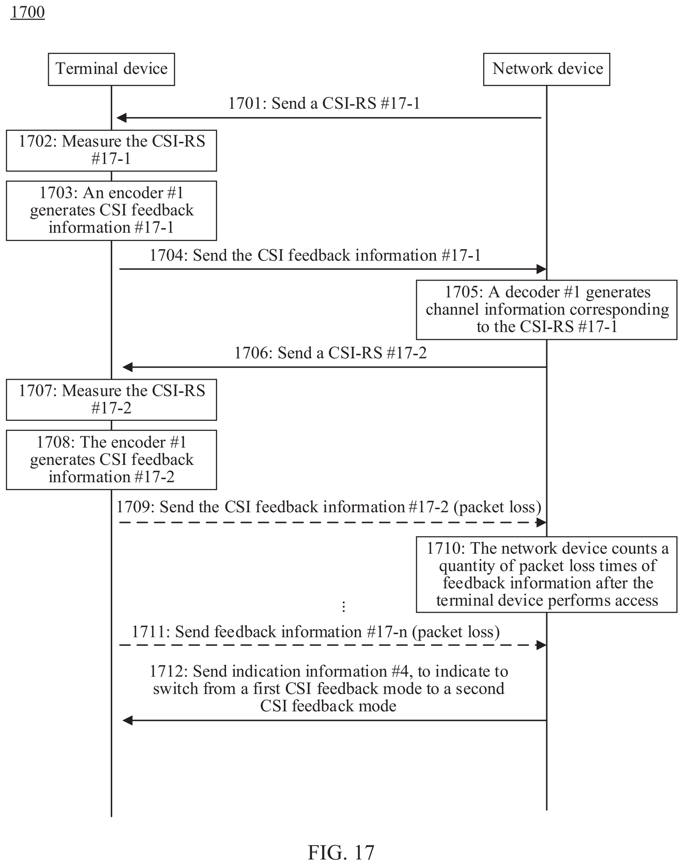

FIG. 17 is a diagram of still another communication method according to an embodiment of this application. The method 1700 shown in FIG. 17 may be considered as an example of the method 1000 shown in FIG. 10. For related descriptions, refer to the method 1000. To avoid repetition, some content is appropriately omitted when the method 1700 is described. The method 1700 may be applied to a time correlation-based CSI feedback scenario. In the method 1700, for a part similar to that in the method 1500, refer to the descriptions of the method 1500. To avoid repetition, some content is appropriately omitted when the method 1700 is described.

As shown in FIG. 17, the method 1700 includes the following steps.

1701: A network device sends a CSI-RS #17-1 to a terminal device.

1702: The terminal device measures the CSI-RS #17-1.

1703: The encoder #1 generates CSI feedback information #17-1.

The encoder #1 is an encoder used in a first CSI feedback mode.

1704: The terminal device sends the CSI feedback information #17-1 to the network device.

1705: The decoder #1 generates channel information corresponding to the CSI-RS #17-1.

The decoder #1 is a decoder used in the first CSI feedback mode.

1706: The network device sends a CSI-RS #17-2 to the terminal device.

1707: The terminal device measures the CSI-RS #17-2.

1708: The encoder #1 generates CSI feedback information #17-2.

1709: The terminal device sends the CSI feedback information #17-2 to the network device.

As shown in FIG. 17, a packet loss of the CSI feedback information #17-2 occurs.

1710: The network device counts a quantity of packet loss times of feedback information after the terminal device performs access.

CSI feedback continues to be performed between the network device and the terminal device. For a feedback process, refer to step 1701 to step 1709.

1711: The terminal device sends feedback information #17-n to the network device.

As shown in FIG. 17, a packet loss of the feedback information #17-n occurs.

1712: When the quantity of packet loss times of the CSI feedback information is equal to N, send indication information #4 to the terminal device through triggering, to indicate to switch from the first CSI feedback mode to a second CSI feedback mode.

For a manner of determining N, refer to the method 700.

For example, the switching from the first CSI feedback mode to the second CSI feedback mode may include any one of the following:
switching from the encoder #1 to an encoder #2, and switching from the decoder #1 to a decoder #2, where the encoder #2 and the decoder #2 belong to a time-domain correlation-based two-side model, and a quantity of bits of CSI feedback information generated by the encoder #2 is less than a quantity of bits of the CSI feedback information generated by the encoder #1;
switching from the encoder #1 to an encoder #3, and switching from the decoder #1 to a decoder #3, where the encoder #3 and the decoder #3 belong to a non-time-domain correlation-based two-side model; or
switching from the time-domain correlation-based CSI feedback mode to a non-AI CSI feedback mode.

CSI feedback is performed between the network device and the terminal device in the second CSI feedback mode.

An example in which the second CSI feedback mode is a non-AI CSI feedback mode, and the second CSI feedback mode may be a CSI feedback mode based on a predefined codebook. The network device sends a CSI-RS #17-(n+1) to the terminal device. The terminal device processes the CSI-RS #17-(n+1) based on the predefined codebook, to obtain CSI feedback information #17-(n+1), and sends the CSI feedback information #17-(n+1) to the network device. The network device processes the CSI feedback information #17-(n+1) based on the predefined codebook, to obtain channel information corresponding to the CSI-RS #17-(n+1).

In the solution in this embodiment of this application, the first CSI feedback mode is the time-domain correlation-based feedback mode. After a quantity of pieces of CSI feedback information that fails to be reported reaches a specific threshold, the network device may indicate the terminal device to switch to the second CSI feedback mode, to avoid that accuracy of the channel information recovered by the network device decreases as a quantity of packet loss times increases, that is, help avoid continuous deterioration of feedback performance.

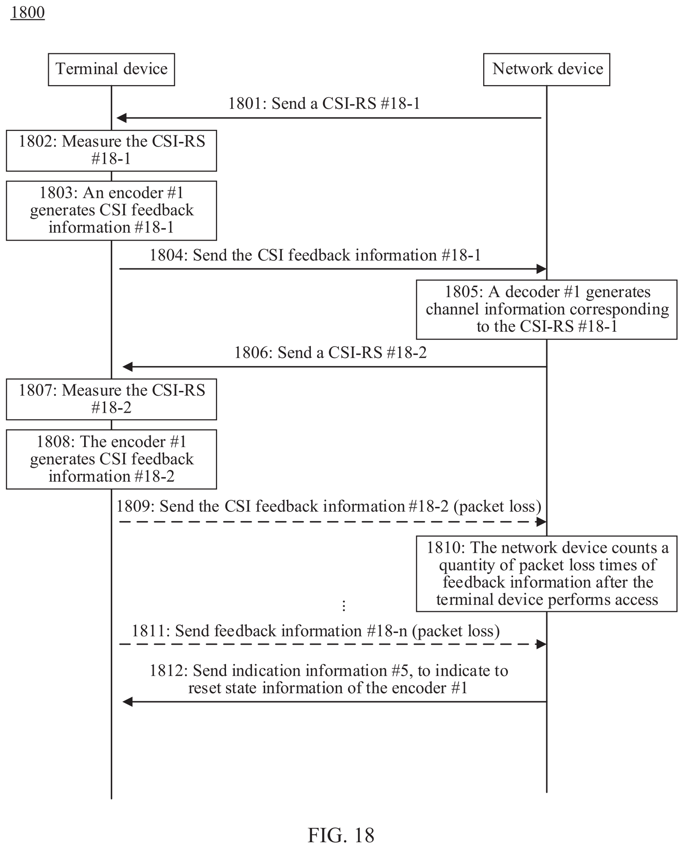

FIG. 18 is a diagram of still another communication method according to an embodiment of this application. The method 1800 shown in FIG. 18 may be considered as an example of the method 1000 shown in FIG. 10. For related descriptions, refer to the method 1000. To avoid repetition, some content is appropriately omitted when the method 1800 is described. The method 1800 may be applied to a time correlation-based CSI feedback scenario.

A main difference between the method 1800 and the method 1700 lies in that, in the method 1700, the network device indicates to increase the CSI feedback mode for switching, while in the method 1800, the network device indicates to reset state information of a model.

In the method 1800, for a part similar to that in the method 1700, refer to the descriptions of the method 1700. To avoid repetition, some content is appropriately omitted when the method 1800 is described.

As shown in FIG. 18, the method 1800 includes the following steps.

1801: A network device sends a CSI-RS #18-1 to a terminal device.

1802: The terminal device measures the CSI-RS #18-1.

1803: The encoder #1 generates CSI feedback information #18-1.

1804: The terminal device sends the CSI feedback information #18-1 to the network device.

1805: The decoder #1 generates channel information corresponding to the CSI-RS #18-1.

1806: The network device sends a CSI-RS #18-2 to the terminal device.

1807: The terminal device measures the CSI-RS #18-2.

1808: The encoder #1 generates CSI feedback information #18-2.

1809: The terminal device sends the CSI feedback information #18-2 to the network device.

As shown in FIG. 18, a packet loss of the CSI feedback information #18-2 occurs.

1810: The network device counts a quantity of packet loss times of feedback information after the terminal device performs access.

The CSI feedback continues to be performed between the network device and the terminal device. For a feedback process, refer to step 1801 to step 1809.

1811: The terminal device sends feedback information #18-n to the network device.

As shown in FIG. 18, a packet loss of the feedback information #18-n occurs.

1812: When the quantity of packet loss times of the CSI feedback information is equal to N, send indication information #5 to the terminal device through triggering, to indicate to reset state information of the encoder #1.

For a manner of determining N, refer to the method 700.

For example, the state information of the encoder #1 is reset to an initial state of the encoder #1.

CSI feedback is performed between the network device and the terminal device based on a reset model.

In the solution in this embodiment of this application, in a time-domain correlation-based feedback scenario, after a quantity of pieces of CSI feedback information that fails to be reported reaches a specific threshold, the network device may indicate to reset the state information of the model, to avoid that accuracy of the channel information recovered by the network device decreases as a quantity of packet loss times increases, that is, help avoid continuous deterioration of feedback performance. As shown in FIG. 9, the manner of resetting the model can improve SGCS performance, that is, help ensure feedback performance.

It may be understood that the information names used in some of the foregoing embodiments are merely examples and constitute no limitation on the protection scope of embodiments of this application.

It may be further understood that the formulas used in embodiments of this application are merely examples for description and constitute no limitation on the protection scope of embodiments of this application. In a process of calculating the foregoing related parameters, calculation may be performed based on the foregoing formulas, or calculation may be performed based on variations of the foregoing formulas, or calculation may be performed in another manner, to satisfy calculation results of the formulas.

It may be further understood that, some optional features in embodiments of this application may be independent of other features in some scenarios, or may be combined with other features in some scenarios. This is not limited.

It may be further understood that, the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that, in the foregoing method embodiments, methods and operations implemented by a device may alternatively be implemented by a component (for example, a chip or a circuit) of the device.

In correspondence to the methods provided in the foregoing method embodiments, embodiments of this application further provide corresponding apparatuses. The apparatus includes corresponding modules configured to perform the foregoing method embodiments. The module may be software, hardware, or a combination of the software and the hardware. It may be understood that the technical features described in the method embodiments are also applicable to the following apparatus embodiments.

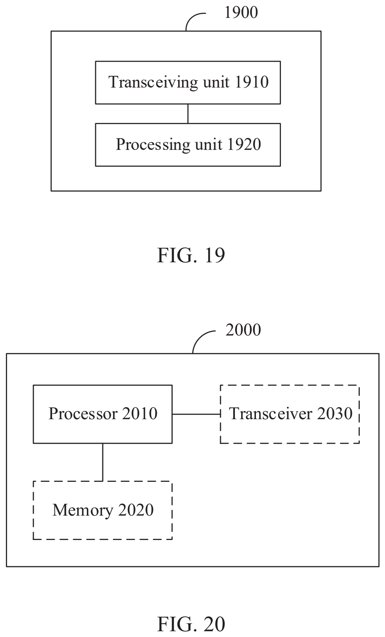

FIG. 19 is a diagram of a communication apparatus 1900 according to an embodiment of this application. The apparatus 1900 includes a transceiving unit 1910 and a processing unit 1920. The transceiving unit 1910 may be configured to implement a corresponding communication function. The transceiving unit 1910 may also be referred to as a communication interface, a communication unit, or the like. The processing unit 1920 may be configured to: implement a corresponding processing function, for example, configure a resource. The processing unit 1920 may also be referred to as a processor or the like.

Optionally, the apparatus 1900 further includes a storage unit. The storage unit may be configured to store instructions and/or data. The processing unit 1920 may read the instructions and/or the data in the storage unit, so that the apparatus implements actions of the device or the network element in the foregoing method embodiments.

The apparatus 1900 may be a terminal device, or may be a communication apparatus that is used in a terminal device or used in cooperation with a terminal device and that can implement a communication method performed on a terminal device side; or the apparatus 1900 may be a network device, or may be a communication apparatus that is used in a network device or used in cooperation with a network device and that can implement a communication method performed on a network device side.

When the apparatus 1900 is used in the terminal device, the apparatus 1900 may implement steps or procedures performed by the terminal device corresponding to the foregoing method embodiments. The transceiving unit 1910 may be configured to perform receiving/sending-related operations of the terminal device in the foregoing method embodiments, and the processing unit 1920 may be configured to perform processing-related operations of the terminal device in the foregoing method embodiments.

When the apparatus 1900 is used in the network device, the apparatus 1900 may implement steps or procedures performed by the network device corresponding to the foregoing method embodiments. The transceiving unit 1910 may be configured to perform receiving/sending-related operations of the network device in the foregoing method embodiments, and the processing unit 1920 may be configured to perform processing-related operations of the network device in the foregoing method embodiments.

It should be understood that specific processes of performing the foregoing corresponding steps by the units are described in detail in the foregoing method embodiments. For brevity, details are not described herein again.

It should be understood that the apparatus 1900 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1900 may be specifically the terminal device in the foregoing embodiments, and may be configured to perform procedures and/or steps corresponding to the terminal device in the foregoing method embodiments; or the apparatus 1900 may be specifically the network device in the foregoing embodiments, and may be configured to perform procedures and/or steps corresponding to the network device in the foregoing method embodiments. To avoid repetition, details are not described herein again.

The apparatus 1900 in the foregoing solutions has a function of implementing corresponding steps performed by a device (for example, the terminal device or the network device) in the foregoing methods. The function may be implemented by hardware, or may be implemented by hardware executing corresponding software. The hardware or the software includes one or more modules corresponding to the foregoing function. For example, the transceiving unit may be replaced with a transceiver (for example, a sending unit in the transceiving unit may be replaced with a transmitter, and a receiving unit in the transceiving unit may be replaced with a receiver), and another unit such as the processing unit may be replaced with a processor, to respectively perform receiving/sending operations and processing-related operations in the foregoing method embodiments.

In addition, the transceiving unit 1910 may alternatively be a transceiver circuit (for example, the transceiver circuit may include a receiver circuit and a transmitter circuit), and the processing unit may be a processing circuit.

It should be noted that the apparatus in FIG. 19 may be the network element or the device in the foregoing embodiments, or may be a chip or a chip system, for example, a system on chip (system on chip, SoC). The transceiving unit may be an input/output circuit or a communication interface. The processing unit is a processor, a microprocessor, or an integrated circuit integrated on the chip. This is not limited herein.

FIG. 20 is a diagram of another communication apparatus 2000 according to an embodiment of this application. The apparatus 2000 includes a processor 2010. The processor 2010 is configured to: execute a computer program or instructions stored in a memory 2020, or read data/signaling stored in the memory 2020, to perform the methods in the foregoing method embodiments. Optionally, there are one or more processors 2010.

Optionally, as shown in FIG. 20, the apparatus 2000 further includes the memory 2020. The memory 2020 is configured to store the computer program or the instructions and/or the data. The memory 2020 may be integrated with the processor 2010, or may be disposed separately. Optionally, there are one or more memories 2020.

Optionally, as shown in FIG. 20, the apparatus 2000 further includes a transceiver 2030, and the transceiver 2030 is configured to: receive and/or send a signal. For example, the processor 2010 is configured to control the transceiver 2030 to receive and/or send the signal.

In a solution, the apparatus 2000 may be used in a terminal device. Specifically, the apparatus 2000 may be a terminal device, or may be an apparatus that can support the terminal device in implementing functions of the terminal device in any one of the foregoing examples. The apparatus 2000 is configured to implement operations performed by the terminal device in the foregoing method embodiments.

For example, the processor 2010 is configured to execute the computer program or the instructions stored in the memory 2020, to implement related operations of the terminal device in the foregoing method embodiments.

In another solution, the apparatus 2000 may be used in a network device. Specifically, the apparatus 2000 may be a network device, or may be an apparatus that can support the network device in implementing functions of the network device in any one of the foregoing examples. The apparatus 2000 is configured to implement operations performed by the network device in the foregoing method embodiments.

For example, the processor 2010 is configured to execute the computer program or the instructions stored in the memory 2020, to implement related operations of the network device in the foregoing method embodiments.

It should be understood that the processor mentioned in embodiments of this application may be a central processing unit (central processing unit, CPU), or may be another general-purpose processor, a digital signal processor (digital signal processor, DSP), an ASIC, a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described herein is intended to include, but is not limited to, these and any other appropriate type of memory.

An embodiment of this application further provides a computer-readable storage medium. The computer-readable storage medium stores computer instructions for implementing a method performed by a communication device in the foregoing method embodiments.

For example, when the computer program is executed by a computer, the computer is caused to implement the method performed by the terminal device in the foregoing method embodiments.

For example, when the computer program is executed by a computer, the computer is caused to implement the method performed by the network device in the foregoing method embodiments.

An embodiment of this application further provides a computer program product, including instructions. When the instructions are executed by a computer, the method performed by a device (for example, the terminal device or the network device) in the foregoing method embodiments is implemented.

An embodiment of this application further provides a communication system, including the foregoing terminal device and the foregoing network device. The terminal device and the network device may implement the communication method shown in any one of the foregoing examples.

Optionally, the system further includes a device that communicates with the terminal device and/or the network device.

For explanations and beneficial effect of related content in any one of the apparatuses provided above, refer to the corresponding method embodiment provided above. Details are not described herein again.

In several embodiments provided in this application, it should be understood that the disclosed apparatuses and methods may be implemented in other manners. For example, the apparatus embodiments described above are merely examples. For example, division into the units is merely logical function division, and may be another division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, all or a part of the procedures or functions according to embodiments of this application are generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a ROM, a RAM, a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending first channel state information CSI feedback information to a network device;
receiving first indication information from the network device; and
sending one or more pieces of CSI feedback information to the network device based on the first indication information, wherein the one or more pieces of CSI feedback information comprise the first CSI feedback information.

2. The method according to claim 1, wherein before the sending the one or more pieces of CSI feedback information to the network device based on the first indication information, the method further comprises:
receiving second indication information from the network device, wherein the second indication information indicates to increase uplink transmit power.

3. The method according to claim 1 or 2, wherein the sending the first channel state information CSI feedback information to the network device comprises:
sending the first CSI feedback information to the network device on a first uplink resource indicated by first uplink resource configuration information; and the receiving the first indication information from the network device comprises:
receiving the first indication information and second uplink resource configuration information from the network device, wherein the second uplink resource configuration information indicates a second uplink resource used to transmit the one or more pieces of CSI feedback information, and a resource quantity for an uplink resource that is in the second uplink resource and that is used to transmit the first CSI feedback information is greater than a resource quantity for the first uplink resource.

4. The method according to any one of claims 1 to 3, wherein the first indication information is used to determine the one or more pieces of CSI feedback information.

5. The method according to claim 4, wherein the first indication information indicates at least one of the following:
an identifier of the one or more pieces of CSI feedback information, an identifier of a reference signal corresponding to the one or more pieces of CSI feedback information, a first time period, identifiers of K pieces of CSI feedback information comprising the one or more pieces of CSI feedback information, or identifiers of reference signals corresponding to the K pieces of CSI feedback information, wherein K is a positive integer, the first time period is before a sending moment of the first indication information, and a sending moment of the one or more pieces of CSI feedback information is within the first time period, or a sending moment of the K pieces of CSI feedback information is within the first time period.

6. The method according to any one of claims 1 to 5, wherein a quantity of reporting failure times of CSI feedback information reaches a first threshold.

7. The method according to claim 6, wherein the first threshold is predefined or preconfigured, or the first threshold is a ratio of a tolerance interval of a first artificial intelligence AI model to a sending periodicity of a reference signal, and the tolerance interval is predefined or preconfigured.

8. The method according to any one of claims 1 to 7, wherein the first CSI feedback information is an output of a second AI model or is based on the output of the second AI model, an input of the second AI model comprises a channel measurement result of a first reference signal, the output of the second AI model is related to the channel measurement result of the first reference signal and a first historical input of the second AI model, the first historical input of the second AI model comprises a channel measurement result of a first historical reference signal, and a sending moment of the first historical reference signal is earlier than a sending moment of the first reference signal; and when the first CSI feedback information is successfully reported, channel information corresponding to the first reference signal is an output of the first AI model, and an input of the first AI model comprises the first CSI feedback information or is based on the first CSI feedback information, wherein the output of the first AI model is related to the first CSI feedback information and a first historical input of the first AI model, the first historical input of the first AI model comprises first historical CSI feedback information or is based on the first historical CSI feedback information, and a receiving moment of the first historical CSI feedback information is earlier than a receiving moment of the first CSI feedback information.

9. A communication method, comprising:
sending first uplink resource configuration information to a terminal device, wherein the first uplink resource configuration information indicates a first uplink resource used to transmit first channel state information CSI feedback information;
sending first indication information and second uplink resource configuration information to the terminal device, wherein the first indication information indicates the terminal device to send one or more pieces of CSI feedback information, the second uplink resource configuration information indicates a second uplink resource used to transmit the one or more pieces of CSI feedback information, and the one or more pieces of CSI feedback information comprise the first CSI feedback information; and
receiving the one or more pieces of CSI feedback information from the terminal device.

10. The method according to claim 9, wherein before the receiving the one or more pieces of CSI feedback information from the terminal device, the method further comprises:
sending second indication information to the terminal device, wherein the second indication information indicates to increase uplink transmit power.

11. The method according to claim 9 or 10, wherein a resource quantity for an uplink resource that is in the second uplink resource and that is used to transmit the first CSI feedback information is greater than a resource quantity for the first uplink resource.

12. The method according to any one of claims 9 to 11, wherein the first indication information is used to determine the one or more pieces of CSI feedback information.

13. The method according to claim 12, wherein the first indication information indicates at least one of the following:
an identifier of the one or more pieces of CSI feedback information, an identifier of a reference signal corresponding to the one or more pieces of CSI feedback information, a first time period, identifiers of K pieces of CSI feedback information comprising the one or more pieces of CSI feedback information, or identifiers of reference signals corresponding to the K pieces of CSI feedback information, wherein K is a positive integer, the first time period is before a sending moment of the first indication information, and a sending moment of the one or more pieces of CSI feedback information is within the first time period, or a sending moment of the K pieces of CSI feedback information is within the first time period.

14. The method according to any one of claims 9 to 13, wherein a quantity of reporting failure times of CSI feedback information reaches a first threshold.

15. The method according to claim 14, wherein the first threshold is predefined or preconfigured, or the first threshold is a ratio of a tolerance interval of a first AI model to a sending periodicity of a reference signal, and the tolerance interval is predefined or preconfigured.

16. The method according to any one of claims 9 to 15, wherein the first CSI feedback information is an output of a second AI model or is based on the output of the second AI model, an input of the second AI model comprises a channel measurement result of a first reference signal, the output of the second AI model is related to the channel measurement result of the first reference signal and a first historical input of the second AI model, the first historical input of the second AI model comprises a channel measurement result of a first historical reference signal, and a sending moment of the first historical reference signal is earlier than a sending moment of the first reference signal; and when the first CSI feedback information is successfully reported, channel information corresponding to the first reference signal is an output of the first AI model, and an input of the first AI model comprises the first CSI feedback information or is based on the first CSI feedback information, wherein the output of the first AI model is related to the first CSI feedback information and a first historical input of the first AI model, the first historical input of the first AI model comprises first historical CSI feedback information or is based on the first historical CSI feedback information, and a receiving moment of the first historical CSI feedback information is earlier than a receiving moment of the first CSI feedback information.

17. A communication method, comprising:
receiving third indication information from a network device, wherein the third indication information indicates to switch from a first CSI feedback mode to a second CSI feedback mode, and a quantity of reporting failure times of CSI feedback information reaches a first threshold; and
performing CSI feedback with the network device in the second CSI feedback mode.

18. The method according to claim 17, wherein the first threshold is predefined or preconfigured, or the first threshold is a ratio of a tolerance interval of a first AI model to a sending periodicity of a reference signal, and the tolerance interval is predefined or preconfigured.

19. The method according to claim 17 or 18, wherein in the first CSI feedback mode, second CSI feedback information is an output of a second AI model or is based on the output of the second AI model, an input of the second AI model comprises a channel measurement result of a second reference signal, the output of the second AI model is related to the channel measurement result of the second reference signal and a second historical input of the second AI model, the second historical input of the second AI model comprises a channel measurement result of a second historical reference signal, and a sending moment of the second historical reference signal is earlier than a sending moment of the second reference signal; and in the second CSI feedback mode, third CSI feedback information is an output of a third AI model or is based on the output of the third AI model, an input of the third AI model comprises a channel measurement result of a third reference signal, the output of the third AI model is related to the channel measurement result of the third reference signal and a third historical input of the third AI model, the third historical input of the third AI model comprises a channel measurement result of a third historical reference signal, and a sending moment of the third historical reference signal is earlier than a sending moment of the third reference signal, wherein a quantity of bits of the third CSI feedback information is less than a quantity of bits of the second CSI feedback information.

20. The method according to claim 17 or 18, wherein in the first CSI feedback mode, second CSI feedback information is an output of a second AI model or is based on the output of the second AI model, an input of the second AI model comprises a channel measurement result of a second reference signal, the output of the second AI model is related to the channel measurement result of the second reference signal and a second historical input of the second AI model, the second historical input of the second AI model comprises a channel measurement result of a second historical reference signal, and a sending moment of the second historical reference signal is earlier than a sending moment of the second reference signal; and in the second CSI feedback mode, fourth CSI feedback information is an output of a fourth AI model or is based on the output of the fourth AI model, an input of the fourth AI model comprises a channel measurement result of a fourth reference signal, and the output of the fourth AI model is related to the channel measurement result of the fourth reference signal.

21. The method according to claim 17 or 18, wherein in the first CSI feedback mode, second CSI feedback information is an output of a second AI model or is based on the output of the second AI model, an input of the second AI model comprises a channel measurement result of a second reference signal, the output of the second AI model is related to the channel measurement result of the second reference signal and a second historical input of the second AI model, the second historical input of the second AI model comprises a channel measurement result of a second historical reference signal, and a sending moment of the second historical reference signal is earlier than a sending moment of the second reference signal; and in the second CSI feedback mode, fifth CSI feedback information is based on a predefined codebook and a channel measurement result of a fifth reference signal.

22. A communication method, comprising:
sending third indication information to a terminal device, wherein a quantity of reporting failure times of CSI feedback information reaches a first threshold, and the third indication information indicates to switch from a first CSI feedback mode to a second CSI feedback mode; and
performing CSI feedback with the terminal device in the second CSI feedback mode.

23. The method according to claim 22, wherein the first threshold is predefined or preconfigured, or the first threshold is a ratio of a tolerance interval of a first AI model to a sending periodicity of a reference signal, and the tolerance interval is predefined or preconfigured.

24. The method according to claim 22 or 23, wherein in the first CSI feedback mode, second CSI feedback information is an output of a second AI model or is based on the output of the second AI model, an input of the second AI model comprises a channel measurement result of a second reference signal, the output of the second AI model is related to the channel measurement result of the second reference signal and a second historical input of the second AI model, the second historical input of the second AI model comprises a channel measurement result of a second historical reference signal, and a sending moment of the second historical reference signal is earlier than a sending moment of the second reference signal; and in the second CSI feedback mode, third CSI feedback information is an output of a third AI model or is based on the output of the third AI model, an input of the third AI model comprises a channel measurement result of a third reference signal, the output of the third AI model is related to the channel measurement result of the third reference signal and a third historical input of the third AI model, the third historical input of the third AI model comprises a channel measurement result of a third historical reference signal, and a sending moment of the third historical reference signal is earlier than a sending moment of the third reference signal, wherein a quantity of bits of the third CSI feedback information is less than a quantity of bits of the second CSI feedback information.

25. The method according to claim 22 or 23, wherein in the first CSI feedback mode, second CSI feedback information is an output of a second AI model or is based on the output of the second AI model, an input of the second AI model comprises a channel measurement result of a second reference signal, the output of the second AI model is related to the channel measurement result of the second reference signal and a second historical input of the second AI model, the second historical input of the second AI model comprises a channel measurement result of a second historical reference signal, and a sending moment of the second historical reference signal is earlier than a sending moment of the second reference signal; and in the second CSI feedback mode, fourth CSI feedback information is an output of a fourth AI model or is based on the output of the fourth AI model, an input of the fourth AI model comprises a channel measurement result of a fourth reference signal, and the output of the fourth AI model is related to the channel measurement result of the fourth reference signal.

26. The method according to claim 22 or 23, wherein in the first CSI feedback mode, second CSI feedback information is an output of a second AI model or is based on the output of the second AI model, an input of the second AI model comprises a channel measurement result of a second reference signal, the output of the second AI model is related to the channel measurement result of the second reference signal and a second historical input of the second AI model, the second historical input of the second AI model comprises a channel measurement result of a second historical reference signal, and a sending moment of the second historical reference signal is earlier than a sending moment of the second reference signal; and in the second CSI feedback mode, fifth CSI feedback information is based on a predefined codebook and a channel measurement result of a fifth reference signal.

27. A communication method, comprising:
receiving fourth indication information from a network device, wherein a quantity of reporting failure times of CSI feedback information reaches a first threshold, the fourth indication information indicates to reset first state information of a second AI model to second state information, the second state information occurs before the CSI feedback information fails to be reported, the first state information is based on a fourth historical input of the second AI model, the fourth historical input of the second AI model comprises a channel measurement result of a fourth historical reference signal, the second state information is initial state information of the second AI model or is based on a fifth historical input based on the second AI model, the fifth historical input of the second AI model comprises a channel measurement result of a fifth historical reference signal, and a sending moment of the fourth historical reference signal is later than a sending moment of the fifth historical reference signal; and
sending sixth CSI feedback information to the network device, wherein the sixth CSI feedback information is an output of the second AI model or is based on the output of the second AI model, an input of the second AI model comprises a channel measurement result of a sixth reference signal, and the output of the second AI model is related to the channel measurement result of the sixth reference signal and the second state information.

28. The method according to claim 27, wherein the first threshold is predefined or preconfigured, or the first threshold is a ratio of a tolerance interval of a first AI model to a sending periodicity of a reference signal, and the tolerance interval is predefined or preconfigured.

29. A communication method, comprising:
sending fourth indication information to a terminal device, wherein a quantity of reporting failure times of CSI feedback information reaches a first threshold, the fourth indication information indicates to reset first state information of a second AI model to second state information, the second state information occurs before the CSI feedback information fails to be reported, the first state information is based on a fourth historical input of the second AI model, the fourth historical input of the second AI model comprises a channel measurement result of a fourth historical reference signal, the second state information is initial state information of the second AI model or is based on a fifth historical input based on the second AI model, the fifth historical input of the second AI model comprises a channel measurement result of a fifth historical reference signal, and a sending moment of the fourth historical reference signal is later than a sending moment of the fifth historical reference signal; and
receiving sixth CSI feedback information from the terminal device, wherein the sixth CSI feedback information is an output of the second AI model or is based on the output of the second AI model, an input of the second AI model comprises a channel measurement result of a sixth reference signal, and the output of the second AI model is related to the channel measurement result of the sixth reference signal and the second state information.

30. The method according to claim 29, wherein the first threshold is predefined or preconfigured, or the first threshold is a ratio of a tolerance interval of a first AI model to a sending periodicity of a reference signal, and the tolerance interval is predefined or preconfigured.

31. A computer-readable storage medium, wherein the computer-readable storage medium comprises instructions, and when the instructions are run by a processor, the method according to any one of claims 1 to 8 is implemented, the method according to any one of claims 9 to 16 is implemented, the method according to any one of claims 17 to 21 is implemented, the method according to any one of claims 22 to 26 is implemented, the method according to claim 27 or 28 is implemented, or the method according to claim 29 or 30 is implemented.

32. A communication apparatus, wherein the communication apparatus comprises a processor and a storage medium, the storage medium stores instructions, and when the instructions are run by the processor, the communication apparatus is caused to perform the method according to any one of claims 1 to 8, the method according to any one of claims 9 to 16, the method according to any one of claims 17 to 21, the method according to any one of claims 22 to 26, the method according to claim 27 or 28, or the method according to claim 29 or 30.

33. A communication apparatus, wherein the communication apparatus comprises a module for performing the method according to any one of claims 1 to 8, a module for performing the method according to any one of claims 17 to 21, or a module for performing the method according to claim 27 or 28.

34. A communication apparatus, wherein the communication apparatus comprises a module for performing the method according to any one of claims 9 to 16, a module for performing the method according to any one of claims 22 to 26, or a module for performing the method according to claim 29 or 30.

35. A communication apparatus, wherein the communication apparatus comprises a processor, and the processor is configured to process data and/or information, so that the method according to any one of claims 1 to 8 is implemented, the method according to any one of claims 9 to 16 is implemented, the method according to any one of claims 17 to 21 is implemented, the method according to any one of claims 22 to 26 is implemented, the method according to claim 27 or 28 is implemented, or the method according to claim 29 or 30 is implemented.

36. A chip, comprising a processor, wherein the processor is configured to run a program or instructions, to implement the method according to any one of claims 1 to 8, the method according to any one of claims 9 to 16, the method according to any one of claims 17 to 21, the method according to any one of claims 22 to 26, the method according to claim 27 or 28, or the method according to claim 29 or 30.

37. A computer program product, wherein the computer program product comprises computer program code or instructions, and when the computer program code or the instructions are run, the method according to any one of claims 1 to 8 is implemented, the method according to any one of claims 9 to 16 is implemented, the method according to any one of claims 17 to 21 is implemented, the method according to any one of claims 22 to 26 is implemented, the method according to claim 27 or 28 is implemented, or the method according to claim 29 or 30 is implemented.

38. A communication system, wherein the communication system comprises one or a combination of the following apparatuses: a communication apparatus that performs the method according to any one of claims 1 to 8, a communication apparatus that performs the method according to any one of claims 9 to 16, a communication apparatus that performs the method according to any one of claims 17 to 21, a communication apparatus that performs the method according to any one of claims 22 to 26, a communication apparatus that performs the method according to claim 27 or 28, or a communication apparatus that performs the method according to claim 29 or 30.
